# EUROPEAN PATENT SPECIFICATION

(11) **EP 3 720 155 B1**
(45) Date of publication and mention of the grant of the patent: **23.04.2025**
(21) Application number: 18884339.5
(22) Date of filing: 23.05.2018
(51) Int. Cl.: H04W 4/06, H04W 4/021

(54) **METHOD AND SYSTEM FOR MANAGING MBMS SERVICE AREA**
VERFAHREN UND SYSTEM ZUR VERWALTUNG EINES MBMS-DIENSTBEREICHS
PROCÉDÉ ET SYSTÈME DE GESTION DE ZONE DE DESSERTE DE MBMS

(30) Priority: 30.11.2017 CN 201711242542
(43) Date of publication of application: 07.10.2020
(73) Proprietor: ZTE Corporation, Shenzhen, Guangdong 518057 (CN)
(72) Inventor: WANG, Wei, Shenzhen Guangdong 518057 (CN); ZHOU, Heng, Shenzhen Guangdong 518057 (CN)
(74) Representative: Canzler & Bergmeier Patentanwälte Partnerschaft mbB
(86) International application number: PCT/CN2018/088005
(87) International publication number: WO 2019/104960

(56) References cited:
- EP-A1- 2 131 603
- EP-A1- 3 188 518
- WO-A1-2017/171297
- CN-A- 102 395 110
- CN-A- 102 740 234
- CN-A- 107 770 727
- US-A1- 2010 189 027
- US-A1- 2019 090 099
- QUALCOMM INCORPORATED: "GCSE Counting using MooD Consumption Report", SA WG2 MEETING #109, S 2-151572, 29 May 2015 (2015-05-29), XP050976879

## Description

### TECHNICAL FIELD

The present disclosure relates to the field of communications and, for example, to a method and system for managing a multimedia broadcast multicast service (MBMS) area.

### BACKGROUND

An enhanced multimedia broadcast multicast service (eMBMS) is introduced to a long term evolution (LTE) system in the 4th generation mobile communications. The eMBMS provides a point-to-multipoint broadcast channel based on an orthogonal frequency division multiplexing (OFDM) modulation mode, which is applicable to a terminal with a video function that receives digital audio or video services in a broadcast or multicast form through a physical multicasts channel (PMCH).

With the development of wireless communication technologies, eMBMS technologies are gradually required by the fields of public safety technologies, cluster communication, Internet of Things, Internet of Vehicles and the like, and a service pattern of the point-to-multipoint broadcast channel draws much attention. In a mission-critical push-to-talk (MCPTT) architecture provided by a third generation partnership project (3GPP) based on the public safety technologies, the eMBMS is explicitly used as a technical solution on a wireless side. It is predictable that in the near future, the eMBMS technologies will play an important role in the field of a public safety cluster, and provide cluster services satisfying service requirements in scenarios such as public security, fire control, railways, emergency disaster relief and the like.

In current protocols, a service coverage range of the eMBMS is developed according to a multicast broadcast single frequency network (MBSFN) area (MA) of an MBMS area. A certain service can only be developed in one MA or multiple MAs corresponding to the certain service, that is, in a corresponding physical space. Currently, the eMBMS supports a relatively flexible MA configuration, and a coverage range of the MA may be small or large or may also be freely adjusted in the background. However, a configuring mode of the MA is always static or semi-static, causing the MA unable to adapt to some usage scenarios.

European Patent Application Publication No. EP 2 131 603 A1 discloses a radio communication base station device and a radio communication method which can reduce the interruption time of a service being received by UE while suppressing a resource consumption amount in an SFN area when the UE performs a handover from the SFN area to a non-SNF area. An MBMS reception request identification unit judges an RRC message inputted from the UE. If an MBMS reception request is contained, an MBMS reception request is transmitted to an MBMS reception request storage unit. Moreover, when the RRC message from the UE contains an adjacent cell reception quality measurement result, a handover decision unit judges whether to perform a handover to the adjacent cell. The MBMS reception request storage unit stores the MBMS reception request outputted from the MBMS reception request identification unit. When the handover decision unit which has decided the handover requests for transmission of an MBMS reception request, the MBMS reception request storage unit transmits the MBMS reception request to an MME.

International Patent Publication No. WO 2017/171297 A1 relates to a communication method and system for converging a 5th-Generation (5G) communication system for supporting higher data rates beyond a 4th-Generation (4G) system with a technology for Internet of Things (IoT). The disclosure may be applied to intelligent services based on the 5G communication technology and the IoT-related technology, such as smart home, smart building, smart city, smart car, connected car, health care, digital education, smart retail, security and safety services. The disclosure discloses a method for transmitting a vehicle to everything (V2X) message, including: receiving a V2X message reported by a vehicle; allocating a unique flow ID for the V2X message; transmitting a Multimedia Broadcast Multicast Service (MBMS) message to a core network (CN), in which the MBMS message carries the flow ID and MBMS service area; after adding the flow ID to a packet header of a MBMS data packet corresponding to the V2X message, transmitting the MBMS data packet in a downlink direction to a gateway or a base station via the CN, such that the gateway or base station forwards the MBMS data packet based on a corresponding relationship, which is between flow ID and MBMS service area. The disclosure also provides an apparatus for transmitting a V2X message. By adopting technical solutions in the disclosure, broadcasting of a downlink V2X message may not be restricted by non-overlapping of service areas in the prior art.

European Patent Application Publication No. EP 3 188 518 A1 discloses a method for LTE trunking communication, a user equipment and a first network element device. The method includes: when a user equipment which is ready to receive trunked service data through a multimedia broadcast/multicast service (MBMS) bearer moves between a cell inside an MBMS single frequency network (MBSFN) area where a trunked service is located and a cell outside the MBMFN area, reporting area identifier information of the user equipment; and the user equipment receiving the trunked service data according to a trunked service bearing mode selected by a network side based on the received area identifier information.

### SUMMARY

The embodiments of the present application provide a method and system for managing an MBMS area, which can dynamically adjust the MBMS area based on a change of a physical position of a service initiating terminal. The features of the method and system for managing an MBMS area according to the present invention are defined in the independent claims, and the preferable features according to the present invention are defined in the dependent claims.

An embodiment of the present application provides a method for managing an MBMS area. The method includes steps described below.

A first communication network element receives a first session establishment request carrying a dedicated MBMS identifier, and determines, according to a received position notification message or a received first area decision message, whether the first communication network element is located within a service area of a dedicated MBMS indicated by the dedicated MBMS identifier.

The dedicated MBMS identifier is used for indicating the dedicated MBMS whose service area is dynamically adjusted based on a change of a physical position of a service initiating terminal, and the position notification message is used for indicating that the service initiating terminal is currently located within a coverage range of the first communication network element.

An embodiment of the present application provides a method for managing an MBMS area. The method includes steps described below.

A second communication network element receives a second session establishment request carrying a dedicated MBMS identifier. The dedicated MBMS identifier is used for indicating a dedicated MBMS whose service area is dynamically adjusted based on a change of a physical position of a service initiating terminal.

The second communication network element sends a first session establishment request carrying the dedicated MBMS identifier to a first communication network element.

An embodiment of the present application provides a method for managing an MBMS area. The method includes steps described below.

In response to detecting a dedicated MBMS whose service area is dynamically adjusted based on a change of a physical position of a service initiating terminal, a second communication network element monitors a first communication network element where the service initiating terminal of the dedicated MBMS is located.

In response to receiving a session establishment request carrying a dedicated MBMS identifier or in response to a switching of the first communication network element where the service initiating terminal is located, the second communication network element sends a position notification message to the first communication network element where the service initiating terminal is currently located.

The dedicated MBMS identifier is used for indicating the dedicated MBMS, and the position notification message is used for indicating that the service initiating terminal is currently located within a coverage range of the first communication network element.

An embodiment of the present application provides a method for managing an MBMS area. The method includes steps described below.

A service initiating terminal applies for a data link.

The service initiating terminal sends data carrying a dedicated service identifier through the data link. The dedicated service identifier is used for indicating a dedicated MBMS whose service area is dynamically adjusted based on a change of a physical position of the service initiating terminal, and the dedicated service identifier has a correspondence with a dedicated MBMS identifier.

An embodiment of the present application provides a method for managing an MBMS area. The method includes steps described below.

A service server receives data carrying a dedicated service identifier. The dedicated service identifier is used for indicating a dedicated MBMS whose service area is dynamically adjusted based on a change of a physical position of a service initiating terminal.

The service server determines, according to the dedicated service identifier, a dedicated MBMS identifier corresponding to the dedicated service identifier, and triggers a session establishment procedure.

An embodiment of the present application provides a system for managing an MBMS area. The system includes a first communication network element and a second communication network element. The first communication network element is connected to the second communication network element.

The second communication network element is configured to send a first session establishment request carrying a dedicated MBMS identifier to the first communication network element.

The first communication network element is configured to receive the first session establishment request, and determine, according to a received position notification message or a received first area decision message, whether the first communication network element is located within a service area of a dedicated MBMS indicated by the dedicated MBMS identifier.

The dedicated MBMS identifier is used for indicating the dedicated MBMS whose service area is dynamically adjusted based on a change of a physical position of a service initiating terminal, and the position notification message is used for indicating that the service initiating terminal is currently located within a coverage range of the first communication network element.

An embodiment of the present application provides a communication network element including a memory and a processor. The memory is configured to store a program for managing an MBMS area, where when executed by the processor, the program implements the method for managing an MBMS area described above.

An embodiment of the present application provides a terminal including a memory and a processor. The memory is configured to store a program for managing an MBMS area, where when executed by the processor, the program implements any one of the methods for managing an MBMS area described above which are applied to the terminal.

An embodiment of the present application provides a service server including a memory and a processor. The memory is configured to store a program for managing an MBMS area, where when executed by the processor, the program implements any one of the method for managing an MBMS area described above which are applied to the service server.

An embodiment of the present application further provides a computer-readable medium, which is configured to store a program for managing an MBMS area, where when executed by a processor, the program implements any one of the methods for managing an MBMS area described above.

In the embodiments of the present application, on the basis of maintaining a multicast service initiation procedure in a current protocol, the first communication network element (for example, a base station) adaptively dynamically adjusts the MBMS area by identifying a service type and monitoring the physical position of the service initiating terminal. In terms of the prospect, the embodiments of the present application compensate for limitations that a current eMBMS service cannot be used specific usage scenarios, and the embodiments of the present application are applicable to various scenarios in the public safety field based on an MCPTT, such as railway scheduling, disaster early warning and video monitoring. Moreover, the embodiments of the present application facilitate a flexible deployment of the eMBMS, and allow quick wireless resources switching between a multicast service and a non-multicast service, that is, satisfy resource usage requirements for burst hot spots, and avoid resource wastes. In addition, a self-organized dynamic service area adjustment mode of the first communication network element is universally applicable to other application scenarios.

Other aspects can be understood after the drawings and the detailed description are read and understood.

### BRIEF DESCRIPTION OF DRAWINGS

FIG. 1 is a schematic diagram of a system for managing an MBMS area according to an embodiment of the present application;
FIG. 2 is an example diagram of a system for managing an MBMS area according to an embodiment of the present application;
FIG. 3 is a flowchart of a method for managing an MBMS area according to an embodiment of the present application;
FIG. 4 is a flowchart of another method for managing an MBMS area according to an embodiment of the present application;
FIG. 5 is a flowchart of another method for managing an MBMS area according to an embodiment of the present application;
FIG. 6 is a flowchart of another method for managing an MBMS area according to an embodiment of the present application;
FIG. 7 is a flowchart of another method for managing an MBMS area according to an embodiment of the present application;
FIG. 8 is a flowchart of a registration stage according to an embodiment of the present application;
FIG. 9 is a schematic diagram of a service procedure initiation stage according to an embodiment of the present application;
FIG. 10 is a schematic diagram illustrating processing in a dynamic area generation stage according to an embodiment of the present application;
FIG. 11 is a schematic diagram of a dynamic adjustment of a service area according to an embodiment of the present application;
FIG. 12 is another schematic diagram of a dynamic adjustment of a service area according to an embodiment of the present application;
FIG. 13 is a schematic diagram of a device for managing an MBMS area according to an embodiment of the present application;
FIG. 14 is a schematic diagram of another device for managing an MBMS area according to an embodiment of the present application;
FIG. 15 is a schematic diagram of another device for managing an MBMS area according to an embodiment of the present application;
FIG. 16 is a schematic diagram of another device for managing an MBMS area according to an embodiment of the present application;
FIG. 17 is a schematic diagram of another device for managing an MBMS area according to an embodiment of the present application;
FIG. 18 is a schematic diagram of a first communication network element according to an embodiment of the present application;
FIG. 19 is a schematic diagram of a second communication network element according to an embodiment of the present application;
FIG. 20 is a schematic diagram of a third communication network element according to an embodiment of the present application;
FIG. 21 is a schematic diagram of a terminal according to an embodiment of the present application; and
FIG. 22 is a schematic diagram of a service server according to an embodiment of the present application.

### DETAILED DESCRIPTION

For some usage scenarios, such as cluster emergency communication of a railway system, after a certain service is initiated, all relevant users within a certain range around an initiator of the service need to access the service. Moreover, with constant changes of a physical position of the service initiator, a service coverage area needs to be constantly adjusted so that a new user entering the service coverage area joins a cluster, and a user moving away from the service coverage area automatically exits the cluster.

The embodiments of the present application provide a method and system for managing an MBMS area. A first communication network element (for example, a base station) where a service initiating terminal is located is tracked in real time and notified by identifying a data link of the service initiating terminal. The first communication network element automatically adjusts a service coverage range to form a dynamic MBMS area which is adjusted with a change of a physical position of the service initiating terminal.

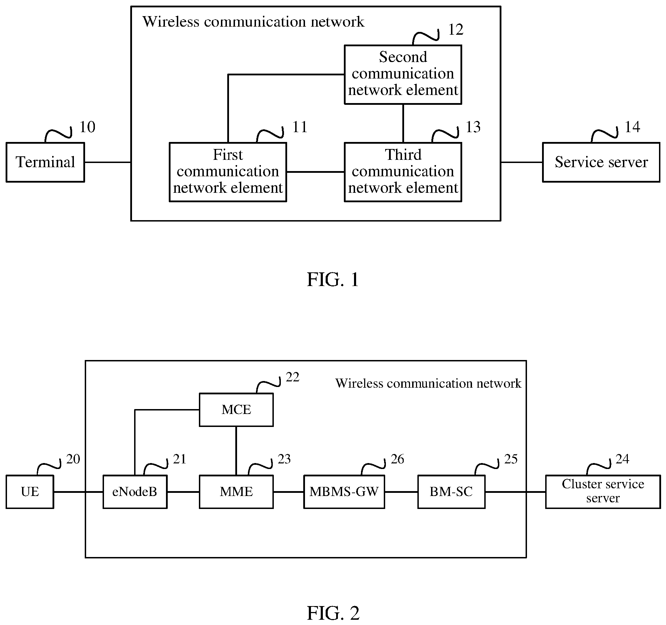

FIG. 1 is a schematic diagram of a system for managing an MBMS area according to an embodiment of the present application. As shown in FIG. 1, the system for managing an MBMS area provided by this embodiment includes a first communication network element 11 and a second communication network element 12. The first communication network element 11 is connected to the second communication network element 12.

The second communication network element 12 is configured to send a first session establishment request carrying a dedicated MBMS identifier (ID) to the first communication network element 11.

The first communication network element 11 is configured to receive the first session establishment request, and determine, according to a received position notification message or a received first area decision message, whether the first communication network element 11 is located within a service area of a dedicated MBMS indicated by the dedicated MBMS identifier.

The dedicated MBMS identifier is used for indicating the dedicated MBMS whose service area is dynamically adjusted based on a change of a physical position of a service initiating terminal, and the position notification message is used for indicating that the service initiating terminal is currently located within a coverage range of the first communication network element 11.

In this embodiment, a difference between the dedicated MBMS and a common MBMS is that the MBMS area of the dedicated MBMS is limited by the physical position of the service initiating terminal and dynamically varies.

In this embodiment, the first area decision message may be used for indicating a distance between a neighboring first communication network element of the first communication network element 11 and a center of the service area of the dedicated MBMS.

In an exemplary implementation mode, the second communication network element 12 may be configured to send the first session establishment request to the first communication network element 11 after receiving a second session establishment request carrying the dedicated MBMS identifier.

In an exemplary implementation mode, as shown in FIG. 1, the system provided by this embodiment may further include a third communication network element 13. The third communication network element 13 is connected to the first communication network element 11 and the second communication network element 12 separately.

The third communication network element 13 may be configured to monitor the first communication network element where the service initiating terminal of the dedicated MBMS is located after detecting the dedicated MBMS.

The third communication network element 13 may be further configured to send the position notification message to the first communication network element where the service initiating terminal is currently located (for example, the first communication network element 11) according to a received third session establishment request carrying the dedicated MBMS identifier or according to a switching of the first communication network element where the service initiating terminal is located.

In an exemplary implementation mode, as shown in FIG. 1, the system in this embodiment may further include the service initiating terminal (e.g., a user equipment (UE)) 10. The service initiating terminal 10 is configured to send data carrying a dedicated service identifier through a link. In an embodiment, the dedicated service identifier is used for indicating the dedicated MBMS identifier, and the dedicated service identifier has a correspondence with the dedicated MBMS identifier.

In an embodiment, as shown in FIG. 1, the system in this embodiment may further include a service server 14. The service server 14 is configured to: receive the data carrying the dedicated service identifier, determine, according to the dedicated service identifier, the dedicated MBMS identifier corresponding to the dedicated service identifier, and trigger a session establishment procedure.

In an exemplary implementation mode, the first communication network element 11 may include a base station (e.g., an eNodeB), the second communication network element 12 may include a multi-cell/multicast coordination entity (MCE), and the third communication network element 13 may include a mobility management entity (MME), which are not limited in the present application.

FIG. 2 is a schematic diagram of a system for managing an MBMS area according to an embodiment of the present application. In this embodiment, the first communication network element is the eNodeB, the second communication network element is the MCE, the third communication network element is the MME, and the service server is a cluster service server (for example, an MCPTT server).

As shown in FIG. 2, the system provided in this example may include a UE 20, an eNodeB 21, an MCE 22, an MME 23, a cluster service server 24, a broadcast/multicast service center (BM-SC) 25 and an MBMS gate way (MBMS-GW) 26. The BM-SC 25 and the MBMS-GW 26 are participators in a multicast service initiation process.

In this example, the UE 20 is configured to carry a dedicated service identifier in a service initiation stage, that is, serves as a service initiating terminal. The cluster service server 24 is configured to identify whether a service initiated currently is a dedicated MBMS and identify relevant information on the service initiating terminal. The MCE 22 is configured to: configure a dedicated MBMS identifier corresponding to the dedicated service identifier, uniformly manage channel resources corresponding to the dedicated service identifier, and support configuring a range of a dynamic MBMS area through a background parameter. The MME 23 is configured to: monitor a physical position of the service initiating terminal and send position change information of the service initiating terminal to the eNodeB 21. Each of multiple eNodeBs 21 to which the MCE 22 and the MME 23 belong is configured to determine whether the eNodeB is located within a dynamic range of an MBMS area and direct a wireless resource management strategy.

In this example, a process of dynamically adjusting the MBMS area based on the physical position of the service initiating terminal may include the following three stages: a registration stage, a service procedure initiation stage and a dynamic area generation stage. The three stages are separately described below based on the system for managing an MBMS area in this example.

In this example, the registration stage may include processes described below.

The MCE reports the dedicated MBMS ID to the MME, where the MBMS ID is used for identifying a dedicated MBMS. In an embodiment, a difference between the dedicated MBMS and the common MBMS is that the MBMS area of the dedicated MBMS is limited by the position of the service initiating terminal and dynamically varies. The MBMS ID may be sent to the MME when a link connection is established between the MCE and the MME, or may be specifically sent to the MME through an independent message.

The MCE reserves independent multicast resources for the dedicated MBMS, where the multicast resources may include at least one multicast sub-frame. In an embodiment, when the dedicated MBMS is initiated, the MCE schedules the multicast resources.

The MCE delivers the dedicated MBMS ID and a dynamic area range identifier to the eNodeB. In an embodiment, the dynamic area range identifier may be configured in the background and be used for identifying a range of the dedicated MBMS area. For example, the dynamic area range identifier may indicate a maximum distance between a boundary of the service area of the dedicated MBMS and a center of the service area. The dedicated MBMS ID and the dynamic area range identifier may be carried in a response message for a link connection establishment, where the link connection establishment is made by the eNodeB to the MCE, or may be actively delivered to the eNodeB through a special configuration message.

The cluster service server is configured with the dedicated MBMS ID corresponding to the dedicated MBMS and routing information supporting the dedicated MBMS ID.

In this example, the service procedure initiation stage may include the first step to the fifth step described below.

In the first step, a dedicated cluster service is initiated.

In this step, the UE initiates the dedicated cluster service, and writes the dedicated service identifier into a user plane data packet to indicate a service type to the cluster service server. In an embodiment, when initiating the service, the UE applies for a bearer link by using a dedicated quality of service (QoS) class identifier (QCI). The dedicated QCI may be an extended QCI independent of a standard protocol, and is dedicated to the dedicated cluster service described above.

In the second step, the service type is identified and the service is started.

The cluster service server determines, according to the dedicated service identifier reported by the UE, that the service initiated by the UE is the dedicated MBMS whose service area is dynamically adjusted based on the change of the position of the service initiating terminal, that is, a service corresponding to the dedicated MBMS ID. The cluster service server delivers user plane data sent by the service initiating terminal, the dedicated MBMS ID and the routing information supporting the dedicated MBMS ID together to the BM-SC, and triggers the eMBMS session establishment procedure.

In the third step, the position of the service initiating terminal is monitored.

When the MME detects that a QCI of a certain data link is the dedicated QCI, the MME determines that a bearer of the data link needs to be monitored. The MME monitors a physical identifier (for example, an Internet protocol (IP) address) and a change condition of a bearer end, the eNodeB, and tracks in real time and records the service initiating terminal is currently located within which eNodeB's coverage range.

In the fourth step, the MME notifies the eNodeB of position change information of the service initiating terminal.

The BM-SC performs a standard session establishment procedure. When the MME receives a session establishment request (corresponding to the third session establishment request described above) carrying the dedicated MBMS ID from the MBMS-GW, the MME sends, according to a position monitoring record of the service initiating terminal, a position notification message to the eNodeB where the service initiating terminal is currently located. The position notification message is used for notifying the eNodeB that it is providing a wireless access for the service initiating terminal. When the service initiating terminal is handed over across cells, the MME sends the position notification message to a new eNodeB which is providing the wireless access for the service initiating terminal according to a change of the position monitoring record until a service bearer of the service initiating terminal is removed.

In the fifth step, a multicast service is selected to be performed.

The MME continues to perform the standard session establishment procedure. When the eNodeB receives, from the MCE, a session connection request (corresponding to the above first session connection request) carrying the dedicated MBMS ID and corresponding schedule information, the eNodeB needs to determine whether the eNodeB itself is located within a dynamic service area of the dedicated MBMS.

In an embodiment, when an eNodeB determines that itself is not located within the dynamic service area, the eNodeB stores relevant configuration information delivered by the MCE, and schedules corresponding resources according to a non-multicast sub-frame mode. When an eNodeB determines that itself is located within the dynamic service area, the eNodeB performs the subsequent standard session establishment procedure, that is, the eNodeB delivers a service notification and a relevant configuration parameter, officially joins an Internet protocol (IP) multicast group, and performs the multicast service on the corresponding wireless resource.

In this example, the dynamic area generation stage may include the first step to the fourth step described below.

In the first step, after the eNodeB receives the dynamic area range identifier from the MCE, the eNodeB begins to locally maintain the area decision parameter. The area decision parameter is used for determining whether the eNodeB is located within the dynamic service area. The area decision parameter includes the following three elements: the dynamic area range identifier, a central position offset identifier and a sequence number.

In an embodiment, the dynamic area range identifier is received from the MCE and directly stored locally. The central position offset identifier is maintained by the eNodeB, and its initialization value is the same as that of the dynamic area range identifier. The sequence number is maintained by the eNodeB, and its initialization value is all 0.

In the second step, when a certain eNodeB receives the position notification message sent by the MME, the eNodeB triggers one dynamic area generation procedure. In an embodiment, the eNodeB increases the locally stored sequence number by 1, sets the locally stored central position offset identifier to 0, and generates an area decision message (corresponding to the above second area decision message) composed of the locally stored central position offset identifier increased by 1 and the updated sequence number into. The eNodeB sends the area decision message to its all neighboring eNodeBs through an X2 interface or an S1 interface, and the dynamic area generation stage proceeds to the fourth step.

In the third step, when a certain eNodeB receives an area decision message (corresponding to the first area decision message described above), if a value of a sequence number carried in the received area decision message is the same as a value of a sequence number stored locally by the eNodeB, the eNodeB directly ignores the received area decision message and ends the procedure; if the value of the sequence number carried in the received area decision message is different from the value of the sequence number stored locally by the eNodeB, the eNodeB stores the sequence number and a central position offset identifier carried in the received area decision message locally.

If a value of the central position offset identifier carried in the received area decision message is the same as a value of a locally stored dynamic area range identifier, the fourth step is performed. If the value of the central position offset identifier carried in the received area decision message is different from the value of the locally stored dynamic area range identifier, the locally updated central position offset identifier is increased by 1 and combined with the updated sequence number into the area decision message (corresponding to the second area decision message described above). The eNodeB sends the area decision message to all its neighboring eNodeBs through the X2 interface or the S1 interface, and the fourth step is performed.

In the fourth step, the eNodeB compares the updated central position offset identifier stored locally with the dynamic area range identifier. If the central position offset identifier is less than the dynamic area range identifier, the eNodeB determines that the eNodeB is located within the dynamic service area. If the central position offset identifier is greater than or equal to the dynamic area range identifier, the eNodeB determines that the eNodeB is not located within the dynamic service area.

In this embodiment, on the basis of maintaining a multicast service initiation procedure in a current protocol, the eNodeB adaptively dynamically adjusts an eMBMS area by identifying the service type and monitoring the physical position of the service initiating terminal. In terms of the prospect, the embodiments of the present application compensate for limitations that a current eMBMS service cannot be used specific usage scenarios, and the embodiments of the present application are applicable to various scenarios in the public safety field based on an MCPTT, such as railway scheduling, disaster early warning and video monitoring. Moreover, the embodiments of the present application facilitate a flexible deployment of the eMBMS, and allow quick wireless resources switching between a multicast service and a non-multicast service, that is, satisfy resource usage requirements for burst hot spots, and avoid resource wastes. In addition, a self-organized dynamic service area adjustment mode of the first communication network element is universally applicable to other application scenarios.

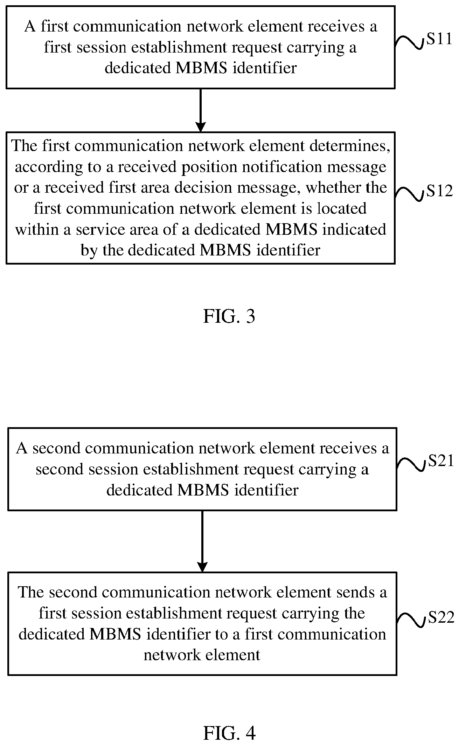

FIG. 3 is a flowchart of a method for managing an MBMS area according to an embodiment of the present application. As shown in FIG. 3, the method for managing an MBMS area according to this embodiment includes steps S11 and S12 described below.

In step S11, a first communication network element receives a first session establishment request carrying a dedicated MBMS identifier.

In step S12, the first communication network element determines, according to a received position notification message or a first area decision message of the first communication network element, whether the first communication network element is located within a service area of a dedicated MBMS indicated by the dedicated MBMS identifier.

In an embodiment, the dedicated MBMS identifier is used for indicating the dedicated MBMS whose service area is dynamically adjusted based on a change of a physical position of a service initiating terminal. The position notification message is used for indicating that the service initiating terminal is currently located within a coverage range of the first communication network element.

In an embodiment, the first area decision message may be used for indicating a distance between a neighboring first communication network element of the first communication network element and a center of the service area of the dedicated MBMS.

In an exemplary implementation mode, step S12 may include steps described below.

The first communication network element updates a locally stored area decision parameter according to the received position notification message, and determines whether the first communication network element is located within the service area of the dedicated MBMS according to the updated area decision parameter. Alternatively, the first communication network element updates the locally stored area decision parameter according to the received first area decision message and determines whether the first communication network element is located within the service area of the dedicated MBMS according to the updated area decision parameter, where the first area decision message carries an area decision parameter of the neighboring first communication network element of the first communication network element.

In an exemplary implementation mode, the area decision parameter may include at least a dynamic area range identifier and a central position offset identifier. The dynamic area range identifier is used for indicating a range of the service area of the dedicated MBMS, for example, may indicate a maximum distance between a boundary of the service area of the dedicated MBMS and the center of the service area of the dedicated MBMS. The central position offset identifier is used for indicating a distance between the first communication network element and the center of the service area of the dedicated MBMS.

In an exemplary implementation mode, the step in which the first communication network element determines whether the first communication network element is located within the service area of the dedicated MBMS according to the updated area decision parameter may include steps described below. If a central position offset identifier stored locally by the first communication network element is less than the dynamic area range identifier, the first communication network element determines that the first communication network element is located within the service area of the dedicated MBMS; and if the central position offset identifier stored locally by the first communication network element is greater than or equal to the dynamic area range identifier, the first communication network element determines that the first communication network element is not located within the service area of the dedicated MBMS.

In an exemplary implementation mode, the first communication network element updates the locally stored area decision parameter according to the received position notification message may include that if the first communication network element receives the position notification message, the first communication network element sets the locally stored central position offset identifier to 0. In this way, it indicates that the first communication network element is located at the center of the service area of the dedicated MBMS.

The step in which the first communication network element updates the locally stored area decision parameter according to the received first area decision message may include a step described below.

If the first communication network element receives the first area decision message, the first communication network element updates the locally stored central position offset identifier to a central position offset identifier in the area decision parameter of the neighboring first communication network element of the first communication network element carried in the first area decision message. A difference between the central position offset identifier carried in the first area decision message and a central position offset identifier stored locally by the neighboring first communication network element is 1. In other words, the first communication network element may indicate the distance between the first communication network element and the center of the service area of the dedicated MBMS to neighboring first communication network elements through the first area decision message.

In an exemplary implementation mode, after the first communication network element receives the position notification message, the method in this embodiment may further include a step described below.

The first communication network element broadcasts a second area decision message to the neighboring first communication network elements of the first communication network element. A central position offset identifier carried in the second area decision message is equal to the central position offset identifier stored locally by the first communication network element plus 1.

In an exemplary implementation mode, after the first communication network element receives the first area decision message, the method in this embodiment may further include a step described below.

If the central position offset identifier in the area decision parameter of the neighboring first communication network element of the first communication network element carried in the first area decision message is not equal to a dynamic area range identifier stored locally by the first communication network element, the first communication network element broadcasts the second area decision message to the neighboring first communication network element of the first communication network element. The central position offset identifier carried in the second area decision message is equal to the central position offset identifier stored locally by the first communication network element plus 1.

In an exemplary implementation mode, the area decision parameter may further include a sequence number.

After the first communication network element receives the position notification message or the first area decision message, the method in this embodiment may further include a step described below.

The first communication network element increases a locally stored sequence number by 1 according to the received position notification message. Alternatively, if the first communication network element determines, according to the received first area decision message, that a sequence number in the area decision parameter of the neighboring first communication network element of the first communication network element carried in the first area decision message is equal to a sequence number in the area decision parameter stored locally by the first communication network element, the first communication network element discards the received first area decision message.

In the exemplary implementation mode, the first communication network element may determine, according to the sequence number carried in the received first area decision message, whether the area decision parameter carried in the received first area decision message can be used, that is, determine whether to perform a dynamic service area adjustment process. However, it is not limited in the present application. In other implementation modes, other elements may be configured in the area decision parameter to achieve the function described above.

In an exemplary implementation mode, before step S11, the method in this embodiment may further include a step described below.

The first communication network element receives the dedicated MBMS identifier and the dynamic area range identifier. The dynamic area range identifier is used for indicating the range of the service area of the dedicated MBMS.

In this implementation mode, in a registration stage, the first communication network element receives the dedicated MBMS identifier and the dynamic area range identifier sent by a second communication network element; in a service procedure initiating stage, the first communication network element may setermine whether the first session establishment request carries the dedicated MBMS identifier.

In an exemplary implementation mode, the first communication network element may include an eNodeB. However, it is not limited in the present application.

In this embodiment, the first communication network element determines the dynamic service area in a self-organizing mode, which may be applicable to specific usage scenarios that the eMBMS is unable to adapt to and other application scenarios.

FIG. 4 is a flowchart of another method for managing an MBMS area according to an embodiment of the present application. As shown in FIG. 4, the method for managing an MBMS area according to this embodiment includes steps S21 and S22 described below.

In step S21, a second communication network element receives a second session establishment request carrying a dedicated MBMS identifier.

In an embodiment, the dedicated MBMS identifier is used for indicating a dedicated MBMS whose service area is dynamically adjusted based on a change of a physical position of a service initiating terminal.

In step S22, the second communication network element sends a first session establishment request carrying the dedicated MBMS identifier to a first communication network element.

In an exemplary implementation mode, before step S21, the method in this embodiment may further include a step described below.

The second communication network element configures the dedicated MBMS identifier and a dynamic area range identifier, and reserves an independent multicast resource for the dedicated MBMS indicated by the dedicated MBMS identifier. The dynamic area range identifier is used for indicating a range of a service area of the dedicated MBMS. The second communication network element sends the dedicated MBMS identifier and the dynamic area range identifier to the first communication network element. The second communication network element sends the dedicated MBMS identifier to a third communication network element.

The second communication network element may configure the dedicated MBMS identifier corresponding to the dedicated MBMS and the dynamic area range identifier, deliver the dedicated MBMS identifier and the dynamic area range identifier to the first communication network element, and send the dedicated MBMS identifier to the third communication network element in a registration stage.

In an exemplary implementation mode, the step in which the second communication network element sends the dedicated MBMS identifier and the dynamic area range identifier to the first communication network element may include a step described below.

The second communication network element sends the dedicated MBMS identifier and the dynamic area range identifier to the first communication network element through a configuration message; or the second communication network element sends the dedicated MBMS identifier and the dynamic area range identifier to the first communication network element through a response message for a link connection establishment request of the first communication network element.

In an exemplary implementation mode, the step in which the second communication network element sends the dedicated MBMS identifier to the third communication network element may include a step described below.

The second communication network element sends the dedicated MBMS identifier to the third communication network element through a separate message; or the second communication network element sends the dedicated MBMS identifier to the third communication network element through a link connection establishment message.

In an exemplary implementation mode, the first communication network element may include an eNodeB, the second communication network element may include an MCE, and the third communication network element may include an MME, however, which are not limited to this in the present application.

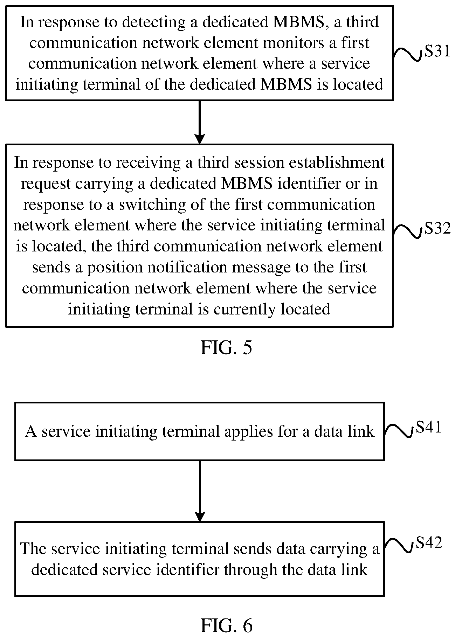

FIG. 5 is a flowchart of another method for managing an MBMS area according to an embodiment of the present application. As shown in FIG. 5, the method for managing an MBMS area according to this embodiment includes steps S31 and S32 described below.

In step S31, when a third communication network element detecting a dedicated MBMS whose service area is dynamically adjusted based on a change of a physical position of a service initiating terminal, the third communication network element monitors a first communication network element where the service initiating terminal of the dedicated MBMS is located.

In step S32, when the third communication network element receiving a third session establishment request carrying a dedicated MBMS identifier or when the first communication network element where the service initiating terminal is located is changed, the third communication network element sends a position notification message to the first communication network element where the service initiating terminal is currently located.

The dedicated MBMS identifier is used for indicating the dedicated MBMS, and the position notification message is used for indicating that the service initiating terminal is currently located within a coverage range of the first communication network element.

In an exemplary implementation mode, the step in which the third communication network element detects the dedicated MBMS may include a step described below.

When the third communication network element detecting that a QoS class identifier (QCI) of a data link is a dedicated QCI, the third communication network element determines that a service borne by the data link is the dedicated MBMS.

In an exemplary implementation mode, before step S31, the method in this embodiment may further include that the third communication network element receives the dedicated MBMS identifier.

In a registration stage, the third communication network element receives the dedicated MBMS identifier configured by a second communication network element from the second communication network element.

In an exemplary implementation mode, the first communication network element may include an eNodeB, the second communication network element may include an MCE, and the third communication network element may include an MME. However, the first communication network element, the second communication network element, and the third communication network element are not limited in the present application.

In this embodiment, the third communication network element tracks in real time the eNodeB where the service initiating terminal is located, and sends the position notification message to the eNodeB where the service initiating terminal is currently located to notify the eNodeB that the eNodeB is currently providing a wireless access for the service initiating terminal.

FIG. 6 is a flowchart of another method for managing an MBMS area according to an embodiment of the present application. As shown in FIG. 6, the method for managing an MBMS area according to this embodiment includes steps S41 and S42 described below.

In step S41, a service initiating terminal applies for a data link.

In step S42, the service initiating terminal sends data carrying a dedicated service identifier through the data link.

In an embodiment, the dedicated service identifier is used for indicating a dedicated MBMS whose service area is dynamically adjusted based on a change of a physical position of the service initiating terminal, and the dedicated service identifier has a correspondence with a dedicated MBMS identifier.

In an exemplary implementation mode, step S41 may include that the service initiating terminal applies for the data link using a dedicated QCI. The dedicated QCI may be an extended QCI independent of a standard protocol.

In this embodiment, when the terminal initiates the dedicated MBMS, the dedicated service identifier is carried to indicate a service type to a service server, so that the service server performs processing corresponding to the service type.

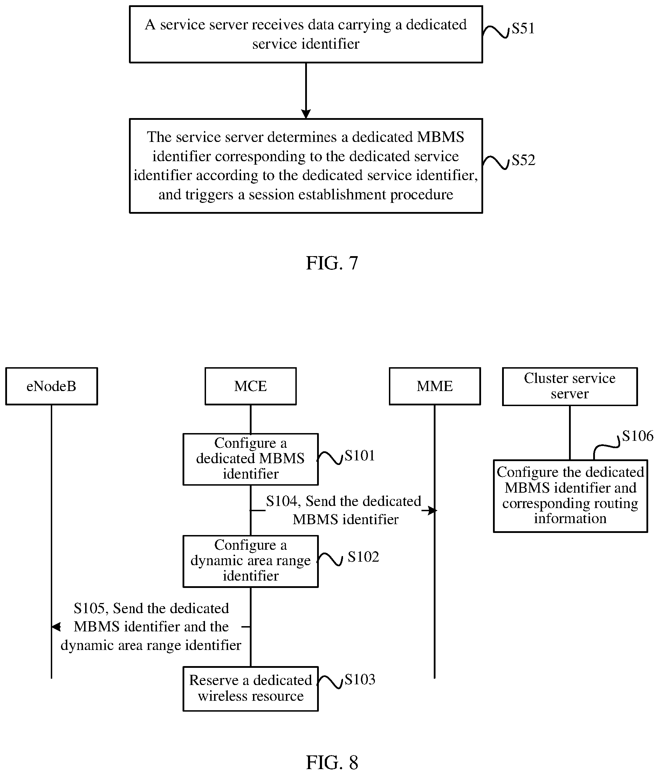

FIG. 7 is a flowchart of another method for managing an MBMS area according to an embodiment of the present application. As shown in FIG. 7, the method for managing an MBMS area according to this embodiment includes steps S51 and S52 described below.

In step S51, a service server receives data carrying a dedicated service identifier.

In an embodiment, the dedicated service identifier is used for indicating a dedicated MBMS whose service area is dynamically adjusted based on a change of a physical position of a service initiating terminal.

In step S52, the service server determines a dedicated MBMS identifier corresponding to the dedicated service identifier according to the dedicated service identifier, and triggers a session establishment procedure.

In an exemplary implementation mode, in S52, triggering the session establishment procedure may include a step described below.

The service server sends a session establishment request to a broadcast/multicast service center (BM-SC), where the session establishment request carries the received data, the dedicated MBMS identifier and routing information corresponding to the dedicated MBMS identifier.

The solutions of the present application will be described below by way of multiple embodiments. The embodiments below are described based on the system shown in FIG. 2.

### Embodiment one

This embodiment describes an implementation process of a registration stage. In the registration stage, a second communication network element (an MCE in this embodiment) sends relevant identifiers to a first communication network element (an eNodeB in this embodiment) and a third communication network element (an MME in this embodiment) to facilitate immediate identification and tracking when a service is initiated.

As shown in FIG. 8, the registration stage in this embodiment includes steps S101 to S106 described below.

In step S101, the MCE configures a dedicated MBMS ID, where the dedicated MBMS ID corresponds to a dedicated MBMS whose service area dynamically changes based on a physical position of a service initiating terminal.

In step S102, the MCE configures a dynamic area range identifier, where the dynamic area range identifier indicates a range of the service area of the dedicated MBMS.

In an embodiment, the eNodeB providing a wireless access for the service initiating terminal serves as a center of a dynamic service area, and the dynamic area range identifier may indicate a maximum distance (in units of cells) between a boundary of the service area of the dedicated MBMS and the center of the area.

In step S103, the MCE configures relevant wireless resources of the dedicated MBMS ID.

In an embodiment, the wireless resources may include one or multiple sub-frames with fixed positions, the wireless resources are relatively independent of wireless resources of other multicast services. The resources are scheduled only when a service corresponding to the dedicated MBMS ID is initiated and not occupied by other multicast services.

In step S104, the MCE reports the dedicated MBMS ID to the MME for the MME to determine whether the service has been initiated and whether to perform a subsequent position notification procedure.

In step S105, the MCE sends the dedicated MBMS ID and the dynamic area range identifier to the eNodeB, where the dedicated MBMS ID is used for the eNodeB to determine whether the initiated multicast service is an eMBMS whose dynamic service area needs to be generated, and the dynamic area range identifier is used for the eNodeB to determine whether the eNodeB is located within the dynamic service area.

In step S106, a cluster service server is configured with the dedicated MBMS ID and routing information supporting the dedicated MBMS ID. The routing information is used for instructing a BM-SC to provide a correct router for a user plane data stream when the eMBMS is initiated.

An execution order of the above steps is not limited in the present application. For example, step S104 may be performed after step S103, step S105 may be performed after step S103, and step S106 may be performed before step S101 or performed simultaneously with step S101.

### Embodiment two

This embodiment describes an implementation process of a service procedure initiating stage. The service procedure initiating stage includes an uplink service in which a service initiating terminal sends a user plane data stream to a cluster server and a downlink broadcast service in which the cluster server distributes the user plane data stream through an eMBMS multicast technology.

An overall service initiation procedure may include the uplink service and the downlink service, both of which are implemented by introducing mechanisms such as service identification, position detection, position notification, and area decision on the basis of a long term evolution (LTE) standard service procedure.

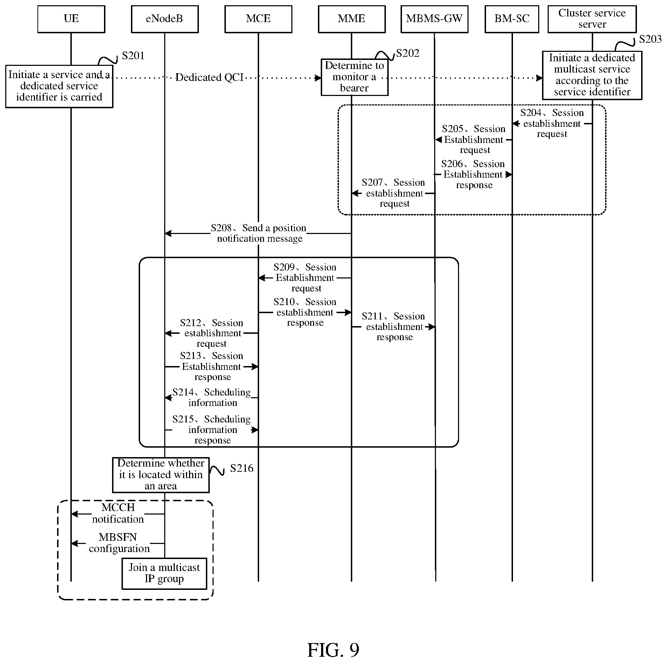

As shown in FIG. 9, the implementation process in this embodiment includes steps S201 to S216 described below.

In step S201, the terminal (e.g. a UE) initiates a dedicated cluster service, writes a dedicated service identifier into a user plane data packet and uses a pre-negotiated dedicated QCI when applies for establishing a dedicated bearer to distinguish from a common specific service bearer.

In step S202, when an MME detects that a QCI of a certain bearer link is the dedicated QCI and determines that a service corresponding to the link bearer is an eMBMS whose service area is dynamically changed based on a position of the service initiating terminal, the MME begins to monitor the bearer. The MME monitors a physical identifier (for example, an IP address) and a change condition of a bearer end, an eNodeB, and tracks in real time and records which eNodeB' coverage range the service initiating terminal is currently located in.

In step S203, a cluster service server (for example, an MCPTT server) determines, according to the dedicated service identifier reported by the UE, that the service is the eMBMS based on the position of the service initiating terminal, that is, a service corresponding to the dedicated MBMS ID.

In step S204, the cluster service server searches for routing information corresponding to the dedicated MBMS ID, delivers the received user plane data stream, the routing information and the dedicated MBMS ID together to a BM-SC, and triggers an eMBMS session establishment procedure.

In step S205, the BM-SC sends a session establishment request to a corresponding MBMS-GW according to the routing information. This procedure belongs to a standard eMBMS session establishment procedure, and a difference is that the dedicated MBMS ID is carried.

In step S206, the MBMS-GW sends a session establishment response message to the BM-SC.

In step S207, the MBMS-GW sends a session establishment request (corresponding to the third session establishment request described above) to a corresponding MME according to the routing information. This procedure belongs to the standard eMBMS session establishment procedure, a difference is that the dedicated MBMS ID is carried.

In step S208, when the MME receives the session establishment request carrying the dedicated MBMS ID from the MBMS-GW, the MME sends, according to a position monitoring record of the service initiating terminal, a position notification message to an eNodeB where the service initiating terminal is currently located to notify the eNodeB that the eNodeB is providing a wireless access for the service initiating terminal. When the service initiating terminal is handed over across cells, the MME may send the position notification message to a new eNodeB which is providing the wireless access according to a change condition of the position monitoring record until a service bearer of the service initiating terminal is removed.

In step S209, the MME sends a session establishment request (corresponding to the second session establishment request described above) to a corresponding MCE according to the routing information. This procedure belongs to the standard eMBMS session establishment procedure, a difference is that the dedicated MBMS ID is carried.

In step S210, the MCE sends a session establishment response message to the MME.

In step S211, the MME sends the session establishment response message to the MBMS-GW.

In steps S212 and S214, when the MCE receives the session establishment request (corresponding to the second session establishment request) carrying the dedicated MBMS ID from the MME, the MCE determines that a service type is the eMBMS based on the position of the service initiating terminal, configures scheduling information on reserved dedicated multicast resources, and sends a session establishment request (corresponding to the first session establishment request described above) and the scheduling information to the corresponding eNodeB. This procedure is similar to a standard MCE processing procedure, a difference is that resource scheduling is performed for a dedicated multicast sub-frame rather than all multicast sub-frames.

In step S213, the eNodeB sends a session establishment response message.

In step S215, the eNodeB sends a scheduling information response message.

In step S216, when the eNodeB receives a session connection request (corresponding to the first session establishment request described above) carrying the dedicated MBMS ID from the MCE and the corresponding scheduling information, the eNodeB determines whether the eNodeB itself is located within a dynamic service area.

When an eNodeB determines that it is not located within the dynamic service area, the eNodeB only stores relevant configuration information delivered by the MCE, and schedules the corresponding wireless resources according to a non-multicast sub-frame mode. When an eNodeB determines that it is located within the dynamic service area, the eNodeB performs the subsequent standard session establishment procedure, that is, the eNodeB delivers an MBMS control channel (MCCH) notification and a relevant MBSFN configuration parameter, officially joins an IP of a multicast group, and performs the multicast service on the corresponding wireless resource.

### Embodiment three

This embodiment describes a process in which an eNodeB determines whether it is located within a dynamic service area after receiving a position notification message sent by an MME or an area decision message sent by another eNodeB.

In this embodiment, each eNodeB stores an area decision parameter, where the area decision parameter includes the following three elements: a dynamic area range identifier, a central position offset identifier and a sequence number. The dynamic area range identifier is received from the MCE and directly stored locally. The central position offset identifier is maintained by the eNodeB, and an initialization value is the same as that of the dynamic area range identifier. The sequence number is maintained by the eNodeB, and an initialization value is all 0.

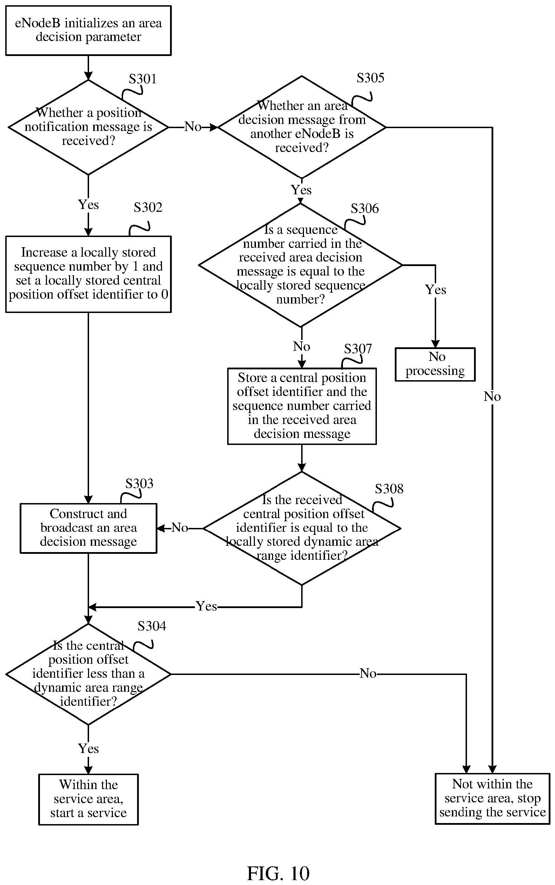

As shown in FIG. 10, the process in this embodiment includes steps S301 to S308 described below.

In step S301, the eNodeB determines whether the eNodeB has received the position notification message from the MME. If the eNodeB has received the position notification message, the eNodeB performs step S302, or otherwise, the eNodeB performs step S305.

In step S302, the eNodeB increases a locally stored sequence number by 1 and sets a locally stored central position offset identifier to 0.

In step S303, the eNodeB increases the locally stored central position offset identifier by 1, forms an area decision message (corresponding to the second area decision message described above) by combining the increased locally stored central position offset identifier and an updated sequence number, and sends the area decision message to all its neighboring eNodeBs through an X2 or S1 interface. Next, step S304 is performed.

In step S304, the eNodeB compares the central position offset identifier with the dynamic area range identifier. If the central position offset identifier is less than the dynamic area range identifier, the eNodeB determines that it is located within the dynamic service area and starts the service. If the central position offset identifier is greater than or equal to the dynamic area range identifier, the eNodeB determines that it is not located within the dynamic service area and stops sending the service.

In step S305, the eNodeB determines whether the eNodeB receives an area decision message (corresponding to the first area decision message described above) from a neighboring eNodeB. If the eNodeB receives the area decision message, the eNodeB performs step S306, or otherwise, the eNodeB determines that it is not located within a service area of a dedicated service and stops sending the service.

In step S306, the eNodeB determines whether a value of a sequence number carried in the received area decision message is the same as a value of the locally stored sequence number. If two values are the same, the eNodeB directly ignores the received area decision message and ends the procedure. If the two values are different, the eNodeB performs step S307.

In step S307, the eNodeB locally stores the sequence number and the central position offset identifier carried in the received area decision message. In this step, the eNodeB updates the locally stored sequence number and the locally stored central position offset identifier to the sequence number and the central position offset identifier carried in the received area decision message.

In step S308, the eNodeB determines whether a value of the central position offset identifier carried in the received area decision message is the same as a value of the locally stored dynamic area range identifier. If the two values are the same, the eNodeB performs step S304. If the two values are different, the eNodeB performs step S303, that is, the central position offset identifier is increased by 1 and combined with the sequence number into the area decision message (corresponding to the second area decision message described above), and the area decision message is sent to all the neighboring eNodeBs of the eNodeB through the X2 or S1 interface.

### Embodiment four

This embodiment describes an implementation process in which each eNodeB in an initial state generates a dynamic service area for the first time.

In this embodiment, each eNodeB stores an area decision parameter, where the area decision parameter includes the following three elements: a dynamic area range identifier, a central position offset identifier and a sequence number. The dynamic area range identifier is received from an MCE and directly stored locally, and in this example, an initialization value of the dynamic area range identifier is 3. The central position offset identifier is maintained by the eNodeB, and an initialization value is the same as that of the dynamic area range identifier. The sequence number is maintained by the eNodeB, and an initialization value is all 0. That is, in this embodiment, an initial area decision parameter of each eNodeB is (3, 3, 0000).

In this embodiment, for the convenience of presentation, the coverage of the eNodeB is simplified into a linear coverage. The coverage of the eNodeB is not limited in the present application. This embodiment is also applicable to a mesh coverage of the eNodeB.

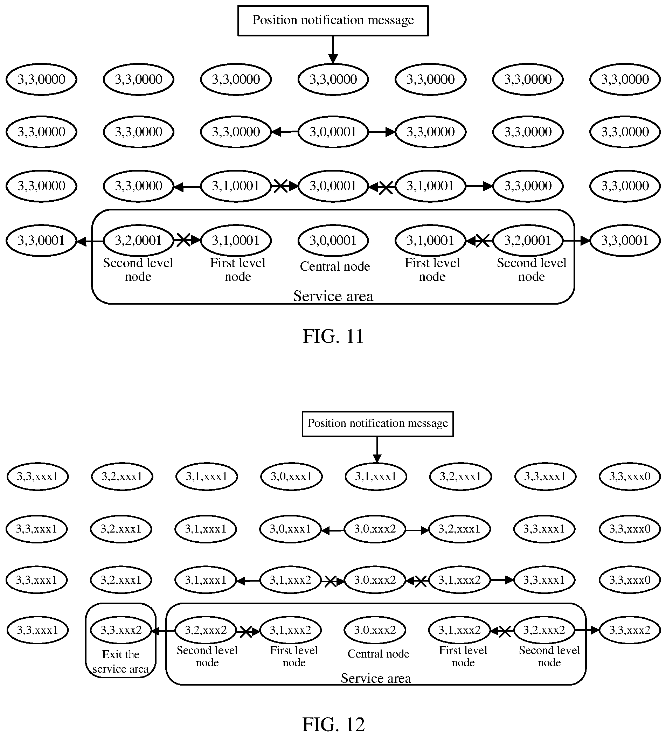

As shown in FIG. 11, the implementation process in this embodiment includes the first step to the fourteenth step.

In the first step, a certain eNodeB receives a position notification message from an MME and determines that the eNodeB itself is located at a center of a dynamic eMBMS area. The eNodeB is referred to as a central eNodeB below.

In the second step, the central eNodeB sets a locally recorded central position offset identifier to 0, increases a locally recorded sequence number by 1, and locally stores the sequence number and the central position offset identifier, that is, the updated locally stored area decision parameter of the central eNodeB is (3, 0, 0001).

In the third step, the central eNodeB constructs an area decision message (1, 0001), and broadcasts the area decision message to all neighboring eNodeBs of the central eNodeB through an S1 or X2 link.

In the fourth step, the central eNodeB determines that the central position offset identifier (with a value of 0 here) is less than the dynamic area range identifier (with a value of 3 here) and the eNodeB is located within the dynamic service area. In this embodiment, the central eNodeB is referred to as a central node.

In the fifth step, an eNodeB which receives the area decision message from the central node determines that the sequence number carried in the received area decision message is inconsistent with a locally stored sequence number, and stores the received sequence number and the received central position offset identifier. The updated locally stored area decision parameter is (3, 1, 0001).

In the sixth step, the eNodeB which receives the area decision message from the central node determines that the updated central position offset identifier (with a value of 1 here) is not equal to the dynamic area range identifier (with the value of 3 here), constructs an area decision message (2, 0001), and broadcasts the constructed area decision message to all neighboring eNodeBs of the eNodeB through the S1 or X2 link.

In the seventh step, the eNodeB which receives the area decision message from the central node determines that the updated central position offset identifier (with the value of 1 here) is less than the dynamic area range identifier (with the value of 3 here), that is, the eNodeB is located within the dynamic service area. In this embodiment, the eNodeB which receives the area decision message from the central node is referred to as a first level node.

In the eighth step, the central node receives the area decision message from the first level node, determines that the sequence number carried in the received area decision message is the same as the locally stored sequence number, does no processing, and discards the received area decision message.

In the ninth step, an eNodeB which receives the area decision message from the first level node determines that the sequence number carried in the received area decision message is inconsistent with a locally stored sequence number, and stores the sequence number and a central position offset identifier carried in the received area decision message. The updated locally stored area decision parameter is (3, 2, 0001).

In the tenth step, the eNodeB which receives the area decision message from the first level node determines that the updated central position offset identifier is not equal to the dynamic area range identifier, and constructs an area decision message (3, 0001); and the eNodeB which receives the area decision message from the first level node broadcasts the constructed area decision message to all neighboring eNodeBs of the eNodeB through the S1 or X2 link.

In the eleventh step, the eNodeB which receives the area decision message from the first level node determines that the updated central position offset identifier (with a value of 2 here) is less than the dynamic area range identifier (with the value of 3 here), that is, the eNodeB is located within the dynamic service area. In this embodiment, the eNodeB which receives the area decision message from the first level node is referred to as a second level node.

In the twelfth step, the first level node receiving the area decision message from the second level node determines that the sequence number carried in the received area decision message is the same as the locally stored sequence number, does no processing, and discards the received area decision message.

In the thirteenth step, an eNodeB which receives the area decision message from the second level node determines that the sequence number carried in the received area decision message is inconsistent with a locally stored sequence number, and stores the sequence number and the central position offset identifier carried in the received area decision message. The updated locally stored area decision parameter is (3, 3, 0001).

In the fourteenth step, the eNodeB which receives the area decision message from the second level node determines that the updated central position offset identifier is equal to the dynamic area range identifier, no longer broadcasts an area decision message to neighboring eNodeBs, and determines that the updated central position offset identifier (with the value of 3 here) is equal to the dynamic area range identifier (with the value of 3 here), that is, the eNodeB is not located within the dynamic service area.

At this point, as shown in FIG. 11, a range of the dynamic service area may be confirmed.

### Embodiment five

This embodiment describes an implementation process in which each eNodeB generates a dynamic service area after a service initiating terminal is handed over across cells. After the eNodeB receives a position notification message, the eNodeB gradually confirms and eventually determines a boundary of the dynamic service area, accepts a new eNodeB into the dynamic service area, and removes an old eNodeB out of the dynamic service area.

In this embodiment, each eNodeB stores an area decision parameter, where the area decision parameter includes the following three elements: a dynamic area range identifier, a central position offset identifier and a sequence number. The dynamic area range identifier is received from an MCE and directly stored locally, and in this example, an initialization value of the dynamic area range identifier is 3. The central position offset identifier is maintained by the eNodeB, and an initialization value is the same as that of the dynamic area range identifier. The sequence number is maintained by the eNodeB, and an initialization value is all 0.

In this embodiment, for the convenience of presentation, the coverage of the eNodeB is simplified into linear coverage. The coverage of the eNodeB is not limited in the present application. This embodiment is also applicable to mesh coverage of the eNodeB.

As shown in FIG. 12, the implementation process in this embodiment includes the first step to the fourteenth step.

In the first step, when the service initiating terminal is handed over across cells, a certain original first level node receives the position notification message from an MME and determines that the original first level node itself is located at a center of a dynamic eMBMS area. The eNodeB is referred to as a central eNodeB below.

In the second step, the central eNodeB sets a locally recorded central position offset identifier to 0, increases a locally recorded sequence number by 1, and locally stores the sequence number and the central position offset identifier, that is, after being updated, a locally stored area decision parameter of the central eNodeB is (3, 0, xxx2).

In the third step, the central eNodeB constructs an area decision message (1, xxx2), and broadcasts the area decision message to all neighboring eNodeBs of the central eNodeB through an S1 or X2 link.

In the fourth step, the central eNodeB determines that the central position offset identifier (with a value of 0 here) is less than the dynamic area range identifier (with a value of 3 here), that is, the central eNodeB is located within the dynamic service area. In this embodiment, the central eNodeB is referred to as a central node.

In the fifth step, an eNodeB which receives the area decision message from the central node determines that the sequence number carried in the received area decision message is inconsistent with a locally stored sequence number, and stores the received sequence number and the received central position offset identifier. After being updated, its locally stored area decision parameter is (3, 1, xxx2).

In the sixth step, the eNodeB which receives the area decision message from the central node determines that the updated central position offset identifier (with value of 1 here) is not equal to the dynamic area range identifier (with the value of 3 here), constructs an area decision message (2, xxx2), and broadcasts the constructed area decision message to all neighboring eNodeBs of the eNodeB through the S1 or X2 link.

In the seventh step, the eNodeB which receives the area decision message from the central node determines that the updated central position offset identifier (with the value of 1 here) is less than the dynamic area range identifier (with the value of 3 here), that is, the eNodeB is located within the dynamic service area. In this embodiment, the eNodeB which receives the area decision message from the central node is referred to as a first level node. As seen from FIG. 12, after the handover, one original central node and one original second level node are updated as the first level nodes.

In the eighth step, the central node receives the area decision message from the first level node, determines that the sequence number carried in the received area decision message is the same as the locally stored sequence number, does no processing, and discards the received area decision message.

In the ninth step, an eNodeB which receives the area decision message from the first level node determines that the sequence number carried in the received area decision message is inconsistent with a locally stored sequence number, and stores the received sequence number and the received central position offset identifier. The updated local area decision parameter is (3, 2, xxx2).

In the tenth step, the eNodeB which receives the area decision message from the first level node determines that the updated central position offset identifier (with a value of 2 here) is not equal to the dynamic area range identifier (with the value of 3 here), constructs an area decision message (3, xxx2), and broadcasts the constructed area decision message to all neighboring eNodeBs of the eNodeB through the S1 or X2 link.

In the eleventh step, the eNodeB which receives the area decision message from the first level node determines that the updated central position offset identifier (with the value of 2 here) is less than the dynamic area range identifier (with the value of 3 here), that is, the eNodeB is located within the dynamic service area. In this embodiment, the eNodeB which receives the area decision message from the first level node is referred to as a second level node. As seen from FIG. 12, after the handover, one original first level node is updated as the second level node, and one node which is originally not located within the dynamic service area enters the dynamic service area as the second level node.

In the twelfth step, the first level node receives the area decision message from the second level node, determines that the sequence number carried in the received area decision message is the same as the locally stored sequence number, does no processing, and discards the received area decision message.

In the thirteenth step, an eNodeB which receives the area decision message from the second level node determines that the sequence number carried in the received area decision message is inconsistent with a locally stored sequence number, and stores the received sequence number and the received central position offset identifier. The updated local area decision parameter of this eNodeB is (3, 3, xxx2).

In the fourteenth step, the eNodeB which receives the area decision message from the second level node determines that the updated central position offset identifier is equal to the dynamic area range identifier, no longer broadcasts an area decision message to neighboring eNodeBs, and determines that the updated central position offset identifier (with the value of 3 here) is equal to the dynamic area range identifier (with the value of 3 here), that is, the eNodeB is not located within the dynamic service area. As seen from FIG. 12, after the handover, one original second level node exits the dynamic service area.

At this point, as shown in FIG. 12, the range of the dynamic service area may be determined.

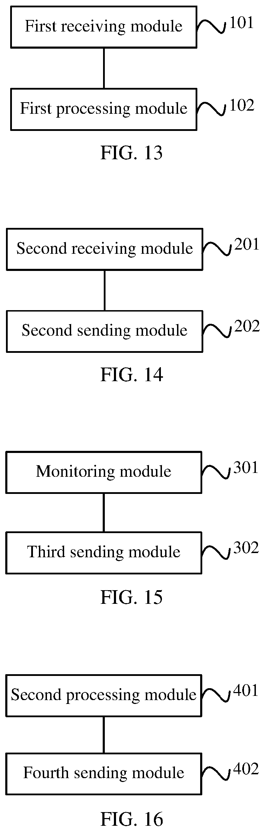

FIG. 13 is a schematic diagram of a device for managing an MBMS area according to an embodiment of the present application. As shown in FIG. 13, the device for managing an MBMS area provided by this embodiment is applied to a first communication network element (for example, an eNodeB) and includes a first receiving module 101 and a first processing module 102.

The first receiving module 101 is configured to receive a first session establishment request carrying a dedicated MBMS identifier. The dedicated MBMS identifier is used for indicating a dedicated MBMS whose service area is dynamically adjusted based on a change of a physical position of a service initiating terminal.

The first processing module 102 is configured to determine, according to a received position notification message or a received first area decision message, whether the first communication network element is located within a service area of the dedicated MBMS.

The position notification message is used for indicating that the service initiating terminal is currently located within a coverage range of the first communication network element.

In an exemplary implementation mode, the first processing module 102 may be configured to determine, according to the received position notification message or the received first area decision message, whether the first communication network element is located within the service area of the dedicated MBMS in a mode described below. The first processing module 102 updates a locally stored area decision parameter according to the received position notification message, and determines whether the first communication network element is located within the service area of the dedicated MBMS according to the updated area decision parameter.

Alternatively, the first processing module 102 updates the locally stored area decision parameter according to the received first area decision message and determines whether the first communication network element is located within the service area of the dedicated MBMS according to the updated area decision parameter. The first area decision message carries an area decision parameter of a neighboring first communication network element of the first communication network element.

In an exemplary implementation mode, the area decision parameter may include at least a dynamic area range identifier and a central position offset identifier. The dynamic area range identifier is used for indicating a range of the service area of the dedicated MBMS. The central position offset identifier is used for indicating a distance between the first communication network element and a center of the service area of the dedicated MBMS.

In an exemplary implementation mode, the first processing module 102 may be configured to determine whether the first communication network element is located within the service area of the dedicated MBMS according to the updated area decision parameter in modes described below. If a central position offset identifier stored locally by the first communication network element is less than the dynamic area range identifier, the first processing module 102 determines that the first communication network element is located within the service area of the dedicated MBMS; and if the central position offset identifier stored locally by the first communication network element is greater than or equal to the dynamic area range identifier, the first processing module 102 determines that the first communication network element is not located within the service area of the dedicated MBMS.

In an exemplary implementation mode, the device provided by this embodiment may further include a first sending module.

The first sending module is configured to broadcast a second area decision message to the neighboring first communication network element of the first communication network element according to the received position notification message.

Alternatively, the first sending module is configured to: in response to determining according to the received first area decision message that a central position offset identifier carried in the first area decision message is not equal to the locally stored dynamic area range identifier, broadcast the second area decision message to the neighboring first communication network element.

A central position offset identifier carried in the second area decision message is equal to the central position offset identifier stored locally by the first communication network element plus 1.

For the related description of the device in this embodiment, reference may be made to the description of the method embodiment corresponding to FIG. 3, and thus no further details are provided herein.

FIG. 14 is a schematic diagram of another device for managing an MBMS area according to an embodiment of the present application. As shown in FIG. 14, the device for managing an MBMS area provided by this embodiment is applied to a second communication network element (for example, an MCE) and includes a second receiving module 201 and a second sending module 202.

The second receiving module 201 is configured to receive a second session establishment request carrying a dedicated MBMS identifier. The dedicated MBMS identifier is used for indicating a dedicated MBMS whose service area is dynamically adjusted based on a change of a physical position of a service initiating terminal.

The second sending module 202 is configured to send a first session establishment request carrying the dedicated MBMS identifier to a first communication network element.

In an exemplary implementation mode, the device provided by this embodiment may further include a configuration module.

The configuration module is configured to configure the dedicated MBMS identifier and a dynamic area range identifier, and reserve an independent multicast resource for the dedicated MBMS indicated by the dedicated MBMS identifier. The dynamic area range identifier is used for indicating a range of the service area of the dedicated MBMS.

The second sending module 202 is further configured to send the dedicated MBMS identifier and the dynamic area range identifier to the first communication network element and send the dedicated MBMS identifier to a third communication network element.

For the related description of the device in this embodiment, reference may be made to the description of the method embodiment corresponding to FIG. 4, and thus no further details are provided herein.

FIG. 15 is a schematic diagram of a device for managing an MBMS area according to an embodiment of the present application. As shown in FIG. 15, the device for managing an MBMS area provided by this embodiment is applied to a third communication network element (for example, an MME) and includes a monitoring module 301 and a second sending module 302.

The monitor module 301 is configured to: when a dedicated MBMS whose service area is dynamically adjusted based on a change of a physical position of a service initiating terminal is detected, monitor a first communication network element where the service initiating terminal of the dedicated MBMS is located.

The second sending module 302 is configured to send a position notification message to a first communication network element where the service initiating terminal is currently located according to a received third session establishment request carrying a dedicated MBMS identifier or a switching of the first communication network element where the service initiating terminal is located.

The dedicated MBMS identifier is used for indicating the dedicated MBMS, and the position notification message is used for indicating that the service initiating terminal is currently located within a coverage range of the first communication network element.

In an exemplary implementation mode, the device provided by this embodiment may further include a third receiving module.

The third receiving module is configured to receive the dedicated MBMS identifier.

For the related description of the device in this embodiment, reference may be made to the description of the method embodiment corresponding to FIG. 5, and thus no further details are provided herein.

FIG. 16 is a schematic diagram of a device for managing an MBMS area according to an embodiment of the present application. As shown in FIG. 16, the device for managing an MBMS area provided by this embodiment is applied to a service initiating terminal and includes a second processing module 401 and a fourth sending module 402.

The second processing module 401 is configured to apply for a data link.

The fourth sending module 402 is configured to send data carrying a dedicated service identifier through the data link. The dedicated service identifier is used for indicating a dedicated MBMS whose service area is dynamically adjusted based on a change of a physical position of the service initiating terminal, and the dedicated service identifier has a correspondence with a dedicated MBMS identifier.

In an exemplary implementation mode, the second processing module 401 may be configured to apply for the data link using a dedicated QCI.

For the related description of the device in this embodiment, reference may be made to the description of the method embodiment corresponding to FIG. 6, and thus no further details are provided herein.

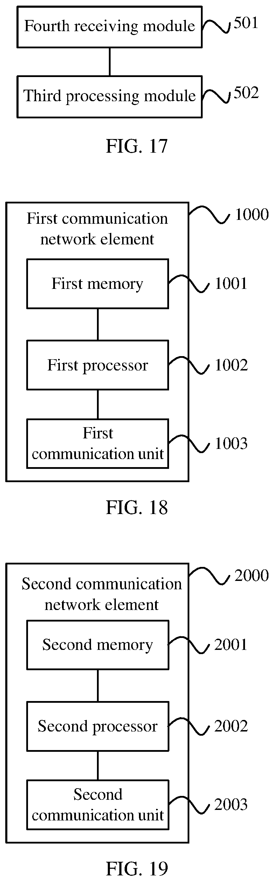

FIG. 17 is a schematic diagram of a device for managing an MBMS area according to an embodiment of the present application. As shown in FIG. 17, the device for managing an MBMS area provided by this embodiment is applied to a service server (for example, an MCPTT server) and includes a fourth receiving module 501 and a third processing module 502.

The fourth receiving module 501 is configured to receive data carrying a dedicated service identifier. The dedicated service identifier is used for indicating a dedicated MBMS whose service area is dynamically adjusted based on a change of a physical position of a service initiating terminal.

The third processing module 502 is configured to determine a dedicated MBMS identifier corresponding to the dedicated service identifier according to the dedicated service identifier and trigger a session establishment procedure.

In an exemplary implementation mode, the third processing module 502 may trigger the session establishment procedure by sending a fourth session establishment request to an BM-SC. The fourth session establishment request carries the received data, the dedicated MBMS identifier, and routing information corresponding to the dedicated MBMS identifier.

For the related description of the device in this embodiment, reference may be made to the description of the method embodiment corresponding to FIG. 7, and thus no further details are provided herein.

FIG. 18 is a schematic diagram of a first communication network element according to an embodiment of the present application. As shown in FIG. 18, a first communication network element 1000 (for example, an eNodeB) provided by this embodiment includes a first memory 1001 and a first processor 1002. The first memory 1001 is configured to store a program for managing an MBMS area. When executed by the first processor 1002, the program implements the method on a first communication network element side according to the embodiments described above.

The first processor 1002 may include, but is not limited to, a microcontroller unit (MCU), a field programmable gate array (FPGA) or other processing devices. The first memory 1001 may be configured to store software programs of application software and modules, such as program instructions or modules corresponding to the method in this embodiment. The first processor 1002 executes the software programs and the modules stored in the first memory 1001 to perform various functional applications and data processing, for example, to implement the method according to this embodiment. The first memory 1001 may include a high-speed random access memory, and may further include a nonvolatile memory, such as one or more magnetic storage devices, flash memories or other nonvolatile solid-state memories. In some examples, the first memory 1001 may include memories which are remotely disposed relative to the first processor 1002 and these remote memories may be connected to the first communication network element 1000 via a network. Examples of the above network include, but are not limited to, the Internet, an intranet, a local area network, a mobile communication network and a combination thereof.

Exemplarily, the first communication network element 1000 may further include a first communication unit 1003. The first communication unit 1003 may receive or send data via a network. In one example, the first communication unit 1003 may be a radio frequency (RF) module, which is configured to communicate with the Internet in a wireless way.

FIG. 19 is a schematic diagram of a second communication network element according to an embodiment of the present application. As shown in FIG. 19, a second communication network element 2000 (for example, an MCE) provided by this embodiment includes a second memory 2001 and a second processor 2002. The second memory 2001 is configured to store a program for managing an MBMS area. When executed by the second processor 2002, the program implements the method on a second communication network element side according to the embodiments described above.

Exemplarily, the second communication network element 2000 may further include a second communication unit 2003.

For the description of the second memory, the second processor, and the second communication unit in this embodiment, reference may be made to the above-mentioned description of the first memory, the first processor, and the first communication unit, and thus no further details are provided herein.

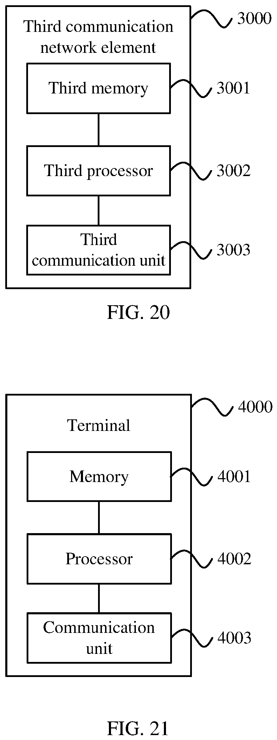

FIG. 20 is a schematic diagram of a third communication network element according to an embodiment of the present application. As shown in FIG. 20, a third communication network element 3000 (for example, an MME) provided by this embodiment includes a third memory 3001 and a third processor 3002. The third memory 3001 is configured to store a program for managing an MBMS area. When executed by the third processor 3002, the program implements the method on a third communication network element side according to the embodiments described above.

Exemplarily, the third communication network element 3000 may further include a third communication unit 3003.

For the description of the third memory, the third processor, and the third communication unit in this embodiment, reference may be made to the above-mentioned description of the first memory, the first processor, and the first communication unit, and thus no further details are provided herein.

FIG. 21 is a schematic diagram of a terminal according to an embodiment of the present application. As shown in FIG. 21, a terminal 4000 provided by this embodiment includes a memory 4001 and a processor 4002. The memory 4001 is configured to store a program for managing an MBMS area, where when executed by the processor 4002, the program implements the method on a terminal side according to the embodiments described above.

Exemplarily, the terminal 4000 may further include a fourth communication unit 4003.

For the description of the memory, the processor, and the communication unit in this embodiment, reference may be made to the above-mentioned description of the first memory, the first processor, and the first communication unit, and thus no further details are provided herein.

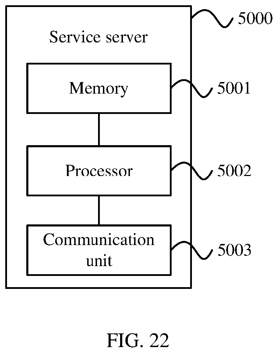

FIG. 22 is a schematic diagram of a service server according to an embodiment of the present application. As shown in FIG. 22, a service server 5000 provided by this embodiment includes a memory 5001 and a processor 5002. The memory 5001 is configured to store a program for managing an MBMS area, where when executed by the processor 5002, the program implements the method on a service server side according to the embodiments described above.

Exemplarily, the service server 5000 may further include a communication unit 5003.

For the description of the memory, the processor, and the communication unit in this embodiment, reference may be made to the above-mentioned description of the first memory, the first processor, and the first communication unit, and thus no further details are provided herein.

In addition, an embodiment of the present application further provides a computer-readable storage medium, which is configured to store a program for managing an MBMS area, where when executed by a processor, the program implements the steps of the method according to any one of the embodiments corresponding to FIG. 3 to FIG. 7.

It should be understood by those skilled in the art that functional modules or units in all or part of the steps of the method, the system and the device disclosed above may be implemented as software, firmware, hardware and appropriate combinations thereof. In the hardware implementation, the division of the functional modules or units mentioned in the above description may not correspond to the division of physical components. For example, one physical component may have multiple functions, or one function or step may be executed jointly by several physical components. Some or all components may be implemented as software executed by processors such as digital signal processors or microcontrollers, hardware, or integrated circuits such as application specific integrated circuits. Such software may be distributed on a computer-readable medium, which may include a computer storage medium (or a non-transitory medium) and a communication medium (or a transitory medium). As is known to those skilled in the art, the term, computer storage medium, includes volatile and nonvolatile, removable and non-removable media implemented in any method or technology for storing information (such as computer-readable instructions, data structures, program modules or other data). The computer storage medium includes, but is not limited to, a random access memory (RAM), a read-only memory (ROM), an electrically erasable programmable read only memory (EEPROM), a flash memory, or other memory technologies, a compact disc read-only memory (CD-ROM), a digital versatile disc (DVD) or other optical disc storage, a magnetic cassette, a magnetic tape, magnetic disk memories or other magnetic storage devices, or any other medium used for storing the desired information and accessible by a computer. In addition, as is known to those skilled in the art, the communication medium generally includes computer-readable instructions, data structures, program modules or other data in modulated data signals such as carriers or other transmission mechanisms, and may include any information delivery medium.

### INDUSTRIAL APPLICABILITY

The method and system for managing an MBMS area provided by the present disclosure can dynamically adjust the MBMS area based on the change of the physical position of the service initiating terminal.

## Claims

1. A method for managing a multimedia broadcast multicast service, MBMS, area, comprising:
receiving (S11), by a first communication network element, a first session establishment request carrying a dedicated MBMS identifier, and determining (S12), by the first communication network element, according to a received position notification message or a received first area decision message, whether the first communication network element is located within a service area of a dedicated MBMS indicated by the dedicated MBMS identifier;
in a case where it is determined that the first communication network element is located within the service area, starting, by the first communication network element, the dedicated MBMS, and in a case where it is determined that the first communication network element is not located within the service area, stopping, by the first communication network element, sending the dedicated MBMS,
wherein the dedicated MBMS identifier is configured to indicate the dedicated MBMS whose service area dynamically changes based on a change of a physical position of a service initiating terminal, and the position notification message is configured to indicate that the service initiating terminal is currently located within a coverage range of the first communication network element.

2. The method of claim 1, wherein the first communication network element determining, according to the received position notification message or the received first area decision message, whether the first communication network element is located within the service area of the dedicated MBMS indicated by the dedicated MBMS identifier comprises:
updating, by the first communication network element, a locally stored area decision parameter according to the received position notification message, and determining, according to the updated area decision parameter, whether the first communication network element is located within the service area of the dedicated MBMS; or
updating, by the first communication network element, a locally stored area decision parameter according to the received first area decision message, and determining, according to the updated area decision parameter, whether the first communication network element is located within the service area of the dedicated MBMS; wherein the first area decision message carries an area decision parameter of a neighboring first communication network element of the first communication network element.

3. The method of claim 2, wherein the area decision parameter comprises a dynamic area range identifier and a central position offset identifier;
wherein the dynamic area range identifier is configured to indicate a range of the service area of the dedicated MBMS, and the central position offset identifier is configured to indicate a distance between the first communication network element and a center of the service area of the dedicated MBMS.

4. The method of claim 3, wherein determining, according to the updated area decision parameter, whether the first communication network element is located within the service area of the dedicated MBMS comprises:
if a central position offset identifier stored locally by the first communication network element is less than the dynamic area range identifier, determining that the first communication network element is located within the service area of the dedicated MBMS; and if the central position offset identifier stored locally by the first communication network element is greater than or equal to the dynamic area range identifier, determining that the first communication network element is not located within the service area of the dedicated MBMS.

5. The method of claim 3 or 4, wherein updating, by the first communication network element, the locally stored area decision parameter according to the received position notification message comprises: if the first communication network element receives the position notification message, setting, by the first communication network element, the locally stored central position offset identifier to 0; and
wherein updating, by the first communication network element, the locally stored area decision parameter according to the received first area decision message comprises: if the first communication network element receives the first area decision message, updating, by the first communication network element, the locally stored central position offset identifier to a central position offset identifier in the area decision parameter of the neighboring first communication network element of the first communication network element carried in the first area decision message, wherein a value difference between the central position offset identifier carried in the first area decision message and a central position offset identifier stored locally by the neighboring first communication network element is 1.

6. The method of any one of claims 3 to 5, wherein after the first communication network element receives the position notification message, the method further comprises:
broadcasting, by the first communication network element, a second area decision message to a neighboring first communication network element of the first communication network element, wherein a central position offset identifier carried in the second area decision message is equal to the central position offset identifier stored locally by the first communication network element plus 1.

7. The method of any one of claims 3 to 5, wherein in a case where the first communication network element receives the first area decision message, after the first communication network element receives the first area decision message, the method further comprises:
if the central position offset identifier in the area decision parameter of the neighboring first communication network element of the first communication network element carried in the first area decision message is not equal to a dynamic area range identifier stored locally by the first communication network element, broadcasting, by the first communication network element, a second area decision message to the neighboring first communication network element, wherein a central position offset identifier carried in the second area decision message is equal to the central position offset identifier stored locally by the first communication network element plus 1.

8. The method of any one of claims 3 to 7, wherein the area decision parameter further comprises: a sequence number;
wherein after the first communication network element receives the position notification message or the first area decision message, the method further comprises:
increasing, by the first communication network element, a locally stored sequence number by 1 according to the received position notification message;
or
wherein in a case where the first communication network element receives the first area decision message, if the first communication network element determines, according to the received first area decision message, that a sequence number in the area decision parameter of the neighboring first communication network element of the first communication network element carried in the first area decision message is equal to a sequence number in the area decision parameter stored locally by the first communication network element, discarding, by the first communication network element, the received first area decision message.

9. The method of claim 1 or 2, wherein before receiving, by the first communication network element, the first session establishment request carrying the dedicated MBMS identifier, the method further comprises:
receiving, by the first communication network element, the dedicated MBMS identifier and a dynamic area range identifier, wherein the dynamic area range identifier is configured to indicate a range of the service area of the dedicated MBMS.

10. The method of claim 1, wherein the first communication network element comprises a base station.

11. A system for managing a multimedia broadcast multicast service, MBMS, area, comprising: a first communication network element and a second communication network element; wherein the first communication network element is connected to the second communication network element;
wherein the second communication network element is configured to send a first session establishment request carrying a dedicated MBMS identifier to the first communication network element; and
wherein the first communication network element is configured to receive the first session establishment request, and determine, according to a received position notification message or a received first area decision message, whether the first communication network element is located within a service area of a dedicated MBMS indicated by the dedicated MBMS identifier;
in a case where it is determined that the first communication network element is located within the service area, the first communication network element is configured to start the dedicated MBMS, and in a case where it is determined that the first communication network element is not located within the service area, the first communication network element is configured to stop sending the dedicated MBMS,
wherein the dedicated MBMS identifier is configured to indicate the dedicated MBMS whose service area dynamically changes based on a change of a physical position of a service initiating terminal, and the position notification message is configured to indicate that the service initiating terminal is currently located within a coverage range of the first communication network element.

## Patentansprüche

1. Verfahren zum Verwalten eines
Multimedia-Übertragungs-Multicast-Service- (MBMS-) Bereichs, umfassend:
Empfangen (S11), durch ein erstes Kommunikationsnetzwerkelement, einer ersten Sitzungsaufbauanforderung, die eine dedizierte MBMS-Kennung trägt, und Bestimmen (S12), durch das erste Kommunikationsnetzwerkelement, gemäß einer empfangenen Positionsbenachrichtigungsnachricht oder einer empfangenen ersten Bereichsentscheidungsnachricht, ob sich das erste Kommunikationsnetzwerkelement innerhalb eines Service-Bereichs eines dedizierten MBMS befindet, der durch die dedizierte MBMS-Kennung angegeben wird,
in einem Fall, in dem bestimmt wird, dass sich das erste Kommunikationsnetzwerkelement innerhalb des Service-Bereichs befindet, Starten, durch das erste Kommunikationsnetzwerkelement, des dedizierten MBMS, und in einem Fall, in dem bestimmt wird, dass sich das erste Kommunikationsnetzwerkelement nicht innerhalb des Service-Bereichs befindet, Stoppen, durch das erste Kommunikationsnetzwerkelement, des Sendens des dedizierten MBMS,
wobei die dedizierte MBMS-Kennung konfiguriert ist zum Angeben des dedizierten MBMS, dessen Service-Bereich sich dynamisch ändert, auf Basis einer Änderung einer physischen Position eines Service-initiierenden Endgeräts, und die Positionsbenachrichtigungsnachricht konfiguriert ist zum Angeben, dass sich das Service-initiierende Endgerät aktuell innerhalb eines Abdeckungsbereichs des ersten Kommunikationsnetzwerkelements befindet.

2. Verfahren nach Anspruch 1, wobei das Bestimmen, durch das erste Kommunikationsnetzwerkelement, gemäß der empfangenen Positionsbenachrichtigungsnachricht oder der empfangenen ersten Bereichsentscheidungsnachricht, ob sich das erste Kommunikationsnetzwerkelement innerhalb des Service-Bereichs des dedizierten MBMS befindet, der durch die dedizierte MBMS-Kennung angegeben wird, umfasst:
Aktualisieren, durch das erste Kommunikationsnetzwerkelement, eines lokal gespeicherten Bereichsentscheidungsparameters gemäß der empfangenen Positionsbenachrichtigungsnachricht, und Bestimmen, gemäß dem aktualisierten Bereichsentscheidungsparameter, ob sich das erste Kommunikationsnetzwerkelement innerhalb des Service-Bereichs des dedizierten MBMS befindet, oder
Aktualisieren, durch das erste Kommunikationsnetzwerkelement, eines lokal gespeicherten Bereichsentscheidungsparameters gemäß der empfangenen ersten Bereichsentscheidungsnachricht, und Bestimmen, gemäß dem aktualisierten Bereichsentscheidungsparameter, ob sich das erste Kommunikationsnetzwerkelement innerhalb des Service-Bereichs des dedizierten MBMS befindet; wobei die erste Bereichsentscheidungsnachricht einen Bereichsentscheidungsparameter eines benachbarten ersten Kommunikationsnetzwerkelements des ersten Kommunikationsnetzwerkelements trägt.

3. Verfahren nach Anspruch 2, wobei der Bereichsentscheidungsparameter eine dynamische Bereichsreichweitenkennung und eine zentrale Positionsversatzkennung umfasst;
wobei die dynamische Bereichsreichweitenkennung konfiguriert ist zum Angeben einer Reichweite des Service-Bereichs des dedizierten MBMS, und die zentrale Positionsversatzkennung konfiguriert ist zum Angeben eines Abstands zwischen dem ersten Kommunikationsnetzwerkelement und einer Mitte des Service-Bereichs des dedizierten MBMS.

4. Verfahren nach Anspruch 3, wobei das Bestimmen, gemäß dem aktualisierten Bereichsentscheidungsparameter, ob sich das erste Kommunikationsnetzwerkelement innerhalb des Service-Bereichs des dedizierten MBMS befindet, umfasst:
wenn eine zentrale Positionsversatzkennung, die lokal durch das erste Kommunikationsnetzwerkelement gespeichert wird, kleiner als die dynamische Bereichsreichweitenkennung ist, Bestimmen, dass sich das erste Kommunikationsnetzwerkelement innerhalb des Service-Bereichs des dedizierten MBMS befindet; und wenn die zentrale Positionsversatzkennung, die lokal durch das erste Kommunikationsnetzwerkelement gespeichert wird, größer oder gleich der dynamischen Bereichsreichweitenkennung ist, Bestimmen, dass sich das erste Kommunikationsnetzwerkelement nicht innerhalb des Service-Bereichs des dedizierten MBMS befindet.

5. Verfahren nach Anspruch 3 oder 4, wobei das Aktualisieren, durch das erste Kommunikationsnetzwerkelement, des lokal gespeicherten Bereichsentscheidungsparameters gemäß der empfangenen Positionsbenachrichtigungsnachricht umfasst: wenn das erste Kommunikationsnetzwerkelement die Positionsbenachrichtigungsnachricht empfängt, Einstellen, durch das erste Kommunikationsnetzwerkelement, der lokal gespeicherten zentralen Positionsversatzkennung auf 0; und
wobei das Aktualisieren, durch das erste Kommunikationsnetzwerkelement, des lokal gespeicherten Bereichsentscheidungsparameters gemäß der empfangenen ersten Bereichsentscheidungsnachricht umfasst: wenn das erste Kommunikationsnetzwerkelement die erste Bereichsentscheidungsnachricht empfängt, Aktualisieren, durch das erste Kommunikationsnetzwerkelement, der lokal gespeicherten zentralen Positionsversatzkennung auf eine zentrale Positionsversatzkennung in dem Bereichsentscheidungsparameter des benachbarten ersten Kommunikationsnetzwerkelements des ersten Kommunikationsnetzwerkelements, das in der ersten Bereichsentscheidungsnachricht getragen wird, wobei eine Wertdifferenz zwischen der zentralen Positionsversatzkennung, die in der ersten Bereichsentscheidungsnachricht getragen wird, und einer zentralen Positionsversatzkennung, die lokal durch das benachbarte erste Kommunikationsnetzwerkelement gespeichert wird, 1 ist.

6. Verfahren nach einem der Ansprüche 3 bis 5, wobei, nachdem das erste Kommunikationsnetzwerkelement die Positionsbenachrichtigungsnachricht empfängt, das Verfahren ferner umfasst:
Übertragen, durch das erste Kommunikationsnetzwerkelement, einer zweiten Bereichsentscheidungsnachricht an ein benachbartes erstes Kommunikationsnetzwerkelement des ersten Kommunikationsnetzwerkelements, wobei eine zentrale Positionsversatzkennung, die in der zweiten Bereichsentscheidungsnachricht getragen wird, gleich der zentralen Positionsversatzkennung ist, die lokal durch das erste Kommunikationsnetzwerkelement gespeichert wird, plus 1.

7. Verfahren nach einem der Ansprüche 3 bis 5, wobei in einem Fall, in dem das erste Kommunikationsnetzwerkelement die erste Bereichsentscheidungsnachricht empfängt, nachdem das erste Kommunikationsnetzwerkelement die erste Bereichsentscheidungsnachricht empfängt, das Verfahren ferner umfasst:
wenn die zentrale Positionsversatzkennung in dem Bereichsentscheidungsparameter des benachbarten ersten Kommunikationsnetzwerkelements des ersten Kommunikationsnetzwerkelements, das in der ersten Bereichsentscheidungsnachricht getragen wird, nicht gleich einer dynamischen Bereichsreichweitenkennung ist, die lokal durch das erste Kommunikationsnetzwerkelement gespeichert wird, Übertragen, durch das erste Kommunikationsnetzwerkelement, einer zweiten Bereichsentscheidungsnachricht an das benachbarte erste Kommunikationsnetzwerkelement, wobei eine zentrale Positionsversatzkennung, die in der zweiten Bereichsentscheidungsnachricht getragen wird, gleich der zentralen Positionsversatzkennung ist, die lokal durch das erste Kommunikationsnetzwerkelement gespeichert wird, plus 1.

8. Verfahren nach einem der Ansprüche 3 bis 7, wobei der Bereichsentscheidungsparameter ferner umfasst: eine Sequenznummer;
wobei, nachdem das erste Kommunikationsnetzwerkelement die Positionsbenachrichtigungsnachricht oder die erste Bereichsentscheidungsnachricht empfängt, das Verfahren ferner umfasst:
Erhöhen, durch das erste Kommunikationsnetzwerkelement, einer lokal gespeicherten Sequenznummer um 1 gemäß der empfangenen Positionsbenachrichtigungsnachricht;
oder
wobei in einem Fall, in dem das erste Kommunikationsnetzwerkelement die erste Bereichsentscheidungsnachricht empfängt, wenn das erste Kommunikationsnetzwerkelement gemäß der empfangenen ersten Bereichsentscheidungsnachricht bestimmt, dass eine Sequenznummer in dem Bereichsentscheidungsparameter des benachbarten ersten Kommunikationsnetzwerkelements des ersten Kommunikationsnetzwerkelements, das in der ersten Bereichsentscheidungsnachricht getragen wird, gleich einer Sequenznummer in dem Bereichsentscheidungsparameter ist, die lokal durch das erste Kommunikationsnetzwerkelement gespeichert wird, Verwerfen, durch das erste Kommunikationsnetzwerkelement, der empfangenen ersten Bereichsentscheidungsnachricht.

9. Verfahren nach Anspruch 1 oder 2, wobei vor dem Empfangen, durch das erste Kommunikationsnetzwerkelement, der ersten Sitzungsaufbauanforderung, die die dedizierte MBMS-Kennung trägt, das Verfahren ferner umfasst:
Empfangen, durch das erste Kommunikationsnetzwerkelement, der dedizierten MBMS-Kennung und einer dynamischen Bereichsreichweitenkennung, wobei die dynamische Bereichsreichweitenkennung konfiguriert ist zum Angeben einer Reichweite des Service-Bereichs des dedizierten MBMS.

10. Verfahren nach Anspruch 1, wobei das erste Kommunikationsnetzwerkelement eine Basisstation umfasst.

11. System zum Verwalten eines Multimedia-Übertragungs-Multicast-Service- (MBMS-) Bereichs, umfassend: ein erstes Kommunikationsnetzwerkelement und ein zweites Kommunikationsnetzwerkelement; wobei das erste Kommunikationsnetzwerkelement mit dem zweiten Kommunikationsnetzwerkelement verbunden ist;
wobei das zweite Kommunikationsnetzwerkelement konfiguriert ist zum Senden einer ersten Sitzungsaufbauanforderung, die eine dedizierte MBMS-Kennung trägt, an das erste Kommunikationsnetzwerkelement; und
wobei das erste Kommunikationsnetzwerkelement konfiguriert ist zum Empfangen der ersten Sitzungsaufbauanforderung, und Bestimmen, gemäß einer empfangenen Positionsbenachrichtigungsnachricht oder einer empfangenen ersten Bereichsentscheidungsnachricht, ob sich das erste Kommunikationsnetzwerkelement innerhalb eines Service-Bereichs eines dedizierten MBMS befindet, der durch die dedizierte MBMS-Kennung angegeben wird;
in einem Fall, in dem bestimmt wird, dass sich das erste Kommunikationsnetzwerkelement innerhalb des Service-Bereichs befindet, das erste Kommunikationsnetzwerkelement konfiguriert ist zum Starten des dedizierten MBMS, und in einem Fall, in dem bestimmt wird, dass sich das erste Kommunikationsnetzwerkelement nicht innerhalb des Service-Bereichs befindet, das erste Kommunikationsnetzwerkelement konfiguriert ist zum Stoppen des Sendens des dedizierten MBMS,
wobei die dedizierte MBMS-Kennung konfiguriert ist zum Angeben des dedizierten MBMS, dessen Service-Bereich sich dynamisch ändert, auf Basis einer Änderung einer physischen Position eines Service-initiierenden Endgeräts, und die Positionsbenachrichtigungsnachricht konfiguriert ist zum Angeben, dass sich das Service-initiierende Endgerät aktuell innerhalb eines Abdeckungsbereichs des ersten Kommunikationsnetzwerkelements befindet.

## Revendications

1. Procédé pour gérer une zone de service de diffusion/multidiffusion multimédia, MBMS, comprenant les étapes consistant à :
recevoir (S11), par un premier élément de réseau de communication, une première demande d'établissement de session transportant un identifiant MBMS dédié, et déterminer (S12), par le premier élément de réseau de communication, selon un message de notification de position reçu ou un premier message de décision de zone reçu, si le premier élément de réseau de communication est localisé dans une zone de service d'un MBMS dédié indiqué par l'identifiant MBMS dédié ;
dans un cas où il est déterminé que le premier élément de réseau de communication est localisé dans la zone de service, démarrer, par le premier élément de réseau de communication, le MBMS dédié, et dans un cas où il est déterminé que le premier élément de réseau de communication n'est pas localisé dans la zone de service, arrêter, par le premier élément de réseau de communication, de transmettre le MBMS dédié,
dans lequel l'identifiant MBMS dédié est configuré pour indiquer le MBMS dédié dont la zone de service change dynamiquement sur la base d'un changement d'une position physique d'un terminal de lancement de service, et le message de notification de position est configuré pour indiquer que le terminal de lancement de service est actuellement localisé dans une plage de couverture du premier élément de réseau de communication.

2. Procédé selon la revendication 1, dans lequel le premier élément de réseau de communication déterminant, selon le message de notification de position reçu ou le premier message de décision de zone reçu, si le premier élément de réseau de communication est localisé dans la zone de service du MBMS dédié indiqué par l'identifiant MBMS dédié comprend les étapes consistant à :
mettre à jour, par le premier élément de réseau de communication, un paramètre de décision de zone stocké localement selon le message de notification de position reçu, et déterminer, selon le paramètre de décision de zone mis à jour, si le premier élément de réseau de communication est localisé dans la zone de service du MBMS dédié ; ou
mettre à jour, par le premier élément de réseau de communication, un paramètre de décision de zone stocké localement selon le premier message de décision de zone reçu, et déterminer, selon le paramètre de décision de zone mis à jour, si le premier élément de réseau de communication est localisé dans la zone de service du MBMS dédié ; dans lequel le premier message de décision de zone transporte un paramètre de décision de zone d'un premier élément de réseau de communication voisin du premier élément de réseau de communication.

3. Procédé selon la revendication 2, dans lequel le paramètre de décision de zone comprend un identifiant de plage de zone dynamique et un identifiant de décalage de position central ;
dans lequel l'identifiant de plage de zone dynamique est configuré pour indiquer une plage de la zone de service du MBMS dédié, et l'identifiant de décalage de position central est configuré pour indiquer une distance entre le premier élément de réseau de communication et un centre de la zone de service du MBMS dédié.

4. Procédé selon la revendication 3, dans lequel l'étape consistant à déterminer, selon le paramètre de décision de zone mis à jour, si le premier élément de réseau de communication est localisé dans la zone de service du MBMS dédié comprend les étapes consistant à :
si un identifiant de décalage de position central stocké localement par le premier élément de réseau de communication est inférieur à l'identifiant de plage de zone dynamique, déterminer que le premier élément de réseau de communication est localisé dans la zone de service du MBMS dédié ; et si l'identifiant de décalage de position central stocké localement par le premier élément de réseau de communication est supérieur ou égal à l'identifiant de plage de zone dynamique, déterminer que le premier élément de réseau de communication n'est pas localisé dans la zone de service du MBMS dédié.

5. Procédé selon la revendication 3 ou 4, dans lequel l'étape consistant à mettre à jour, par le premier élément de réseau de communication, le paramètre de décision de zone stocké localement selon le message de notification de position reçu comprend les étapes consistant à : si le premier élément de réseau de communication reçoit le message de notification de position, définir, par le premier élément de réseau de communication, l'identifiant de décalage de position central stocké localement à 0 ; et
dans lequel l'étape consistant à mettre à jour, par le premier élément de réseau de communication, le paramètre de décision de zone stocké localement selon le premier message de décision de zone reçu comprend les étapes consistant à : si le premier élément de réseau de communication reçoit le premier message de décision de zone, mettre à jour, par le premier élément de réseau de communication, l'identifiant de décalage de position central stocké localement à un identifiant de décalage de position central dans le paramètre de décision de zone du premier élément de réseau de communication voisin du premier élément de réseau de communication transporté dans le premier message de décision de zone, dans lequel une différence de valeur entre l'identifiant de décalage de position central transporté dans le premier message de décision de zone et un identifiant de décalage de position central stocké localement par le premier élément de réseau de communication voisin est 1.

6. Procédé selon l'une quelconque des revendications 3 à 5, dans lequel après que le premier élément de réseau de communication a reçu le message de notification de position, le procédé comprend en outre les étapes consistant à :
diffuser, par le premier élément de réseau de communication, un second message de décision de zone à un premier élément de réseau de communication voisin du premier élément de réseau de communication, dans lequel un identifiant de décalage de position central transporté dans le second message de décision de zone est égal à l'identifiant de décalage de position central stocké localement par le premier élément de réseau de communication plus 1.

7. Procédé selon l'une quelconque des revendications 3 à 5, dans lequel dans un cas où le premier élément de réseau de communication reçoit le premier message de décision de zone, après que le premier élément de réseau de communication a reçu le premier message de décision de zone, le procédé comprend en outre les étapes consistant à :
si l'identifiant de décalage de position central dans le paramètre de décision de zone du premier élément de réseau de communication voisin du premier élément de réseau de communication transporté dans le premier message de décision de zone n'est pas égal à un identifiant de plage de zone dynamique stocké localement par le premier élément de réseau de communication, diffuser, par le premier élément de réseau de communication, un second message de décision de zone au premier élément de réseau de communication voisin, dans lequel un identifiant de décalage de position central transporté dans le second message de décision de zone est égal à l'identifiant de décalage de position central stocké localement par le premier élément de réseau de communication plus 1.

8. Procédé selon l'une quelconque des revendications 3 à 7, dans lequel le paramètre de décision de zone comprend en outre : un numéro de séquence ;
dans lequel après que le premier élément de réseau de communication a reçu le message de notification de position ou le premier message de décision de zone, le procédé comprend en outre les étapes consistant à :
augmenter, par le premier élément de réseau de communication, un numéro de séquence stocké localement de 1 selon le message de notification de position reçu ;
ou
dans lequel dans un cas où le premier élément de réseau de communication reçoit le premier message de décision de zone, si le premier élément de réseau de communication détermine, selon le premier message de décision de zone reçu, qu'un numéro de séquence dans le paramètre de décision de zone du premier élément de réseau de communication voisin du premier élément de réseau de communication transporté dans le premier message de décision de zone est égal à un numéro de séquence dans le paramètre de décision de zone stocké localement par le premier élément de réseau de communication, rejeter, par le premier élément de réseau de communication, le premier message de décision de zone reçu.

9. Procédé selon la revendication 1 ou 2, dans lequel avant de recevoir, par le premier élément de réseau de communication, la première demande d'établissement de session transportant l'identifiant MBMS dédié, le procédé comprend en outre les étapes consistant à :
recevoir, par le premier élément de réseau de communication, l'identifiant MBMS dédié et un identifiant de plage de zone dynamique, dans lequel l'identifiant de plage de zone dynamique est configuré pour indiquer une plage de la zone de service du MBMS dédié.

10. Procédé selon la revendication 1, dans lequel le premier élément de réseau de communication comprend une station de base.

11. Système pour gérer une zone de service de diffusion/multidiffusion multimédia, MBMS, comprenant : un premier élément de réseau de communication et un second élément de réseau de communication ; dans lequel le premier élément de réseau de communication est connecté au second élément de réseau de communication ;
dans lequel le second élément de réseau de communication est configuré pour envoyer une première demande d'établissement de session transportant un identifiant MBMS dédié au premier élément de réseau de communication ; et
dans lequel le premier élément de réseau de communication est configuré pour recevoir la première demande d'établissement de session, et déterminer, selon un message de notification de position reçu ou un premier message de décision de zone reçu, si le premier élément de réseau de communication est localisé dans une zone de service d'un MBMS dédié indiqué par l'identifiant MBMS dédié ;
dans un cas où il est déterminé que le premier élément de réseau de communication est localisé dans la zone de service, le premier élément de réseau de communication est configuré pour démarrer le MBMS dédié, et dans un cas où il est déterminé que le premier élément de réseau de communication n'est pas localisé dans la zone de service, le premier élément de réseau de communication est configuré pour arrêter de transmettre le MBMS dédié,
dans lequel l'identifiant MBMS dédié est configuré pour indiquer le MBMS dédié dont la zone de service change dynamiquement sur la base d'un changement d'une position physique d'un terminal de lancement de service, et le message de notification de position est configuré pour indiquer que le terminal de lancement de service est actuellement localisé dans une plage de couverture du premier élément de réseau de communication.
